# EUROPEAN PATENT APPLICATION

(11) **EP 4 752 667 A1**
(43) Date of publication of application: **03.06.2026**
(21) Application number: 23946151.0
(22) Date of filing: 24.07.2023
(51) Int. Cl.: G05D 1/46

(54) **CONTROL METHOD, APPARATUS AND SYSTEM, MOVABLE PLATFORM, AND STORAGE MEDIUM**

(71) Applicant: SZ DJI Technology Co., Ltd., Shenzhen, Guangdong 518000 (CN)
(72) Inventor: QIN, Luoxiao, Shenzhen, Guangdong 518000 (CN); GUO, Xiaodong, Shenzhen, Guangdong 518000 (CN); LI, Bowen, Shenzhen, Guangdong 518000 (CN); TANG, Weiyi, Shenzhen, Guangdong 518000 (CN); HU, Xiaoxiang, Shenzhen, Guangdong 518000 (CN); QIU, Xinyou, Shenzhen, Guangdong 518000 (CN); LIU, Weiming, Shenzhen, Guangdong 518000 (CN); JIANG, Bing, Shenzhen, Guangdong 518000 (CN); CHEN, Miaohong, Shenzhen, Guangdong 518000 (CN); XU, Zhongyan, Shenzhen, Guangdong 518000 (CN); GUAN, Shuosen, Shenzhen, Guangdong 518000 (CN)
(74) Representative: Appelt, Christian W.
(86) International application number: PCT/CN2023/108993
(87) International publication number: WO 2025/020057

(57) **Abstract**

A control method, device, system, movable platform, and storage medium are provided, the method includes: controlling the movable platform to follow the target while maintaining a first relative distance and a first relative orientation with respect to the target; controlling the movable platform to move toward or away from the target based on a target trajectory from the first relative distance and the first relative orientation, so that the movable platform moves to a second relative distance and a second relative orientation with respect to the target; controlling the movable platform to follow the target while maintaining the second relative distance and the second relative orientation; the first relative distance and the second relative distance are different, and the first relative orientation and the second relative orientation are different.

## Description

### Technical Field

The present application relates to the field of control, and in particular, to a control method, device, system, movable platform, and storage medium.

### Background Art

At present, for mobile shooting scenarios, people are increasingly using autonomously movable carriers in combination with mounted shooting devices to perform automatic shooting, which has given rise to many automatic shooting methods. For example, in scenarios where moving targets are being filmed, the movable platform can automatically follow the target for shooting. However, the current operation trajectories and shooting methods during target following are relatively fixed and monotonous, making it difficult to meet current filming requirements.

### Summary of the Invention

In view of this, the embodiments of the present application provide a control method, device, system, movable platform, and storage medium, aiming to solve the technical problem that the current operation logic and shooting methods of the movable platform when following a target are relatively fixed and monotonous.

In a first aspect, some embodiments of the present application provide a control method, including: controlling a movable platform to follow a target while maintaining a first relative distance and a first relative orientation with respect to the target; controlling the movable platform to move toward or away from the target from the first relative distance and the first relative orientation based on a target trajectory, so that the movable platform moves to a second relative distance and a second relative orientation with respect to the target; and controlling the movable platform to follow the target while maintaining a second relative distance and a second relative orientation, where the first relative distance is different from the second relative distance, and the first relative orientation is different from the second relative orientation.

In a second aspect, some embodiments of the present application provide a control method, including: receiving an input by a user on a control device; and in response to the input, generating a first instruction, the first instruction being configured to instruct the movable platform, while maintaining a first relative distance and a first relative orientation to follow a target, to move toward or away from the target from the first relative orientation based on a target trajectory to a second relative distance and a second relative orientation, and to maintain the second relative distance and the second relative orientation to follow the target.

In a third aspect, some embodiments of the present application provide a control method, including: during a process of a movable platform following a target for shooting, adjusting a relative orientation between the movable platform and the target at least based on environmental information; and controlling the movable platform to follow the target while maintaining an adjusted relative orientation.

In a fourth aspect, some embodiments of the present application provide a control device, including a memory and a processor; the memory is configured to store a computer program; the processor is configured to execute the computer program and, when executing the computer program, implement at least one of the control methods described in the first aspect, the second aspect, and the third aspect.

In a fifth aspect, some embodiments of the present application provide a control system, including: a movable platform, including the control device as described in the third aspect or the fifth aspect; and a control terminal, configured to control the movable platform; or including: a movable platform; and a control terminal, configured to control the movable platform, including the control device as described in the fourth aspect; or including: a movable platform, including the control device as described in the third aspect or the fifth aspect; and a control terminal, configured to control the movable platform, including the control device as described in the fourth aspect.

The present application enables the movable platform to change different relative distances and relative orientations with respect to the target during the process of following the target, thereby generating movement effects such as approaching, receding, and circling during the target-following process, which enriches the movement trajectory when shooting the target.

It should be understood that the above general description and the following detailed description are merely exemplary and explanatory and are not intended to limit the present application.

### Brief Description of the Drawings

In order to more clearly illustrate the technical solutions of the embodiments of the present application, the drawings required for the description of the embodiments will be briefly introduced below. It is obvious that the drawings described below are some embodiments of the present application. For a person skilled in the art, other drawings may also be obtained based on these drawings without creative efforts.
FIG. 1 is a schematic diagram of an application scenario of a control system provided in some embodiments of the present application;
FIG. 2 is a schematic diagram of a possible flow of a control method provided in some embodiments of the present application;
FIG. 3 is a schematic diagram of a following scenario of a control method provided in some embodiments of the present application;
FIG. 4 is a schematic diagram of a following scenario of a control method provided in some embodiments of the present application;
FIG. 5 is a schematic diagram of a following scenario of a control method provided in some embodiments of the present application;
FIG. 6 is a schematic diagram of a following scenario of a control method provided in some embodiments of the present application;
FIG. 7 is a schematic diagram of a following scenario of a control method provided in some embodiments of the present application;
FIG. 8 is a schematic diagram of a shooting scenario of a control method provided in some embodiments of the present application;
FIG. 9 is a schematic diagram of a shooting scenario of a control method provided in some embodiments of the present application;
FIG. 10 is a schematic diagram of a flow of a control method provided in some embodiments of the present application;
FIG. 11 is a schematic diagram of an interaction of a control method provided in in some embodiments of the present application;
FIG. 12 is a schematic diagram of an interaction of a control method provided in in some embodiments of the present application;
FIG. 13 is a schematic diagram of an interaction of a control method provided in in some embodiments of the present application;
FIG. 14 is a schematic diagram of a flow of a control method provided in some embodiments of the present application;
FIG. 15 is a schematic structural diagram of a control device provided in some embodiments of the present application.

### Description of the Embodiments

The technical solutions in the embodiments of the present application will be clearly and completely described below in conjunction with the accompanying drawings of the embodiments of the present application. It is apparent that the described embodiments are only some embodiments of the present application, rather than all embodiments. All other embodiments obtained by a person skilled in the art without creative efforts based on the embodiments of the present application fall within the protection scope of the present application.

The flowcharts shown in the drawings are only illustrative examples and do not necessarily include all contents and operations/steps, nor must they be executed in the described order. For example, some operations/steps may be decomposed, combined, or partially merged, so the actual execution order may vary depending on the actual situation.

At present, for mobile shooting scenarios, people are increasingly using autonomously movable carriers in combination with mounted shooting devices to perform automatic shooting, which has given rise to many automatic shooting methods. For example, in scenarios where some moving targets are being filmed, the movable platform can automatically follow the target for shooting. However, the current operation trajectories and shooting methods during target following are relatively fixed and monotonous. For example, when filming a moving target, the movable platform follows either in front of or behind the target, or parallel follows in the same direction as the target's movement. Such shooting methods lack changes in camera angles and distances, making it difficult to meet current filming requirements.

To solve the above problems, some embodiments of the present application provide a control method, device, system, movable platform, and storage medium, so that the movable platform has more operation trajectories when following and shooting a target, making automatic camera movement more intelligent.

Below, some embodiments of the present application are described in detail in conjunction with the accompanying drawings. In the absence of conflict, the following embodiments and features in the embodiments may be combined with each other.

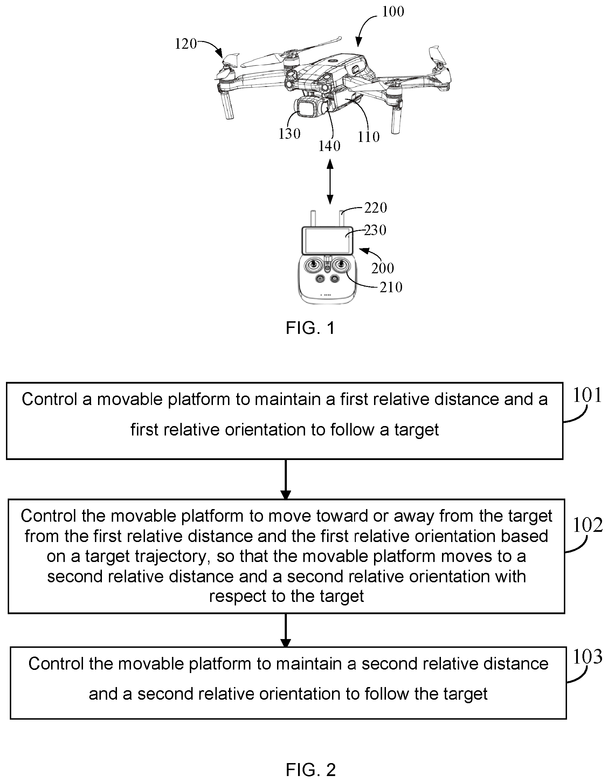

It should be noted that the control method provided in some embodiments of the present application is applied to a movable platform, also referred to as a movable object. The movable platform may be an aerial movable platform or referred to as a flying vehicle (for example, manned flying vehicles or unmanned flying vehicles), a ground movable platform (for example, autonomously movable vehicles, autonomously movable robots, or other platforms), a surface water movable platform, or a movable platform in other scenarios. In the embodiments shown in FIG. 1, an unmanned flying vehicle (UAV) is taken as an example for detailed description.

The UAV may include rotor-type UAVs, such as two-rotor, three-rotor, four-rotor, six-rotor, or eight-rotor UAVs; the UAV may also be a fixed-wing UAV; the UAV may also be a combination of rotor-type and fixed-wing UAVs. The embodiments of the present application do not specifically limit this.

With reference to FIG. 1, which is a schematic structural diagram of a control system provided in some embodiment of the present application, a control system may include a movable platform and a control terminal. The following explanation is given by taking the movable platform as a UAV as an example.

As shown in FIG. 1, a control system may include UAV 100 and control terminal 200. UAV 100 can communicate and connect with control terminal 200. Control terminal 200 can be used to control UAV 100. Control terminal 200 may include at least one of a remote controller, a smartphone, or a tablet computer, and may also include at least one of a remote controller, a smartphone, or a wearable device. The wearable device includes a head-mounted display device. The head-mounted display device may include a virtual reality (VR) display device or a first-person view (FPV) display device.

In some embodiments, UAV 100 includes a body 110, a power system 120, a shooting device 130 (also referred to as a photography device, a camera, or shooting device, etc., including devices capable of capturing photos, videos, or both), and a control terminal (not shown in FIG. 1). The body 110 may include a nose. In certain embodiments, UAV 100 further includes arms. The arms are connected to the body 110. The arms are used to install the power system. In some embodiments, the power system 120 may be directly installed on the body 110.

The power system 120 is used to provide flight power for the UAV. The power system 120 may include a motor(s) and a propeller(s) mounted on the motor(s) and driven by the motor(s). The power system 120 can drive the body 110 of UAV 100 to rotate around one or more rotational axes. For example, the aforementioned rotational axes may include a roll axis, a yaw axis, and a pitch axis. When the power system 120 drives the body 110 to rotate around the yaw axis, the yaw orientation of the nose of the body changes, that is, the UAV can control the yaw rotation of the body 110 by controlling the power system 120. It should be understood that the motor may be a direct current motor or an alternating current motor. Additionally, the motor may be a brushless motor or a brushed motor.

The shooting device 130 is directly mounted on the body 110 or mounted on the body 110 via a gimbal. The shooting device 130 is used to capture images. The images may be pictures and/or videos. In some embodiments, as shown in FIG. 1, the UAV may include a gimbal 140. The shooting device 130 is installed on the gimbal 140; the gimbal 140 is connected to the body 110. In some embodiments, the gimbal 140 can control the yaw rotation of the shooting device 130 to adjust the yaw orientation of the shooting device 130. Specifically, the gimbal 140 may include a yaw motor 141. The yaw motor 141 is used to control the yaw rotation of the shooting device 130. In some embodiments, the gimbal 140 can control the pitch rotation of the shooting device 130 to adjust the pitch orientation of the shooting device 130. Specifically, the gimbal 140 may include a pitch motor. The pitch motor is used to control the pitch rotation of the shooting device 130. In some embodiments, the gimbal 140 can control the roll rotation of the shooting device 130 to adjust the roll orientation of the shooting device 130. Specifically, the gimbal 140 may include a roll motor. The roll motor is used to control the roll rotation of the shooting device 130.

In the yaw direction, the yaw rotation of the shooting device 130 and the yaw rotation of the body 110 may be correlated. Furthermore, the shooting device 130 may yaw rotate following the yaw rotation of the body 110, or the body 110 may yaw rotate following the yaw rotation of the shooting device 130.

The control terminal may include an input device. The input device can detect the control operations of the user of the control terminal; the control terminal can generate control instructions for the UAV based on the user control operations detected by the input device. For example, the control terminal can generate yaw control instructions based on the user's nose yaw control operations detected by the input device of the control terminal, and the control terminal can send the nose yaw control instructions to the UAV; the control terminal can generate pitch control instructions for the gimbal based on the user's gimbal pitch control operations detected by the input device of the control terminal, and the control terminal can send the gimbal pitch control instructions to the UAV.

With reference to FIG. 1, in some embodiments, the control terminal 200 includes a remote controller. The remote controller is provided with an input device 210 and a communication device 220. The communication device 220 is a wireless communication device and may include at least one of a high-frequency radio transceiver, a WiFi module, or a Bluetooth module. The input device 210 is used to generate corresponding control instructions in response to the user's operation, so that the remote controller can control the UAV to adjust flight attitude and/or flight speed through the control instructions. The input device 210 includes at least one of a key, a joystick, a dial, or a touch display. For example, the input device 210 is a joystick installed on the body of the remote controller. The remote controller senses the user's control operation on the joystick and generates corresponding control instructions.

In some embodiments, the control terminal 200 can receive images transmitted by UAV 100 and display them using a display device 230. The display device 230 may be integrated into the control terminal 200. The display device 230 may also be separately arranged from the control terminal 200 and communicate with the control terminal 200. The communication connection may be via a wired communication connection or a wireless communication connection. For example, the wireless communication connection may be a WiFi connection, a Bluetooth connection, or a high-frequency wireless signal connection.

In some embodiments, the control terminal 200 includes a remote controller. The remote controller is provided with an input device 210 and a communication device 220. The communication device 220 is a wireless communication device and may include at least one of a high-frequency radio transceiver, a WiFi module, or a Bluetooth module. The input device 210 is used to generate corresponding control instructions in response to the user's operation, so that the remote controller can control the UAV to adjust flight attitude and/or flight speed through the control instructions. The input device 210 includes at least one of a key, a joystick, a dial, or a touch display. For example, the input device 210 is a joystick installed on the body of the remote controller. The user can generate control instructions by using keys, joystick, or dial, or by input operations on the touch display, without limitation herein.

With reference to the accompanying drawings, taking a human as a target and a movable platform as a UAV as an example, to elaborate on the specific implementation of this application in detail; it should be understood that this exemplary description does not constitute a limitation on this application.

With reference to FIG. 2, FIG. 2 is a schematic flowchart of a control method provided by some embodiments of this application. The method may include:
Step 101: Control a movable platform to maintain a first relative distance and a first relative orientation to follow a target.
Step 102: Control the movable platform to gradually move toward or gradually move away from the target based on a target trajectory from the first relative distance and the first relative orientation.
Step 103: Control the movable platform to maintain a second relative distance and a second relative orientation to follow the target, where the first relative distance is different from the second relative distance, and the first relative orientation is different from the second relative orientation.

In some embodiments of this application, the target can be a person, an animal, a vehicle, a ship, or another movable platform, etc. During a process of the movable platform following the target, the target can be in a moving state or a stationary state, which is not limited herein.

In the above-mentioned Step 103, the movable platform gradually moves toward or away from the target from the first relative distance and the first relative orientation, and gradually moves toward the relative position of the second relative distance and the second relative orientation. Here, gradually moving toward or away from the target can be understood as the movable platform gradually moving from the first relative distance with the target. This allows the movable platform to change the relative orientation with the target while the relative distance gradually increases or decreases to the second relative distance. In this way, the movable platform often forms a gradually receding or approaching motion trajectory relative to the target.

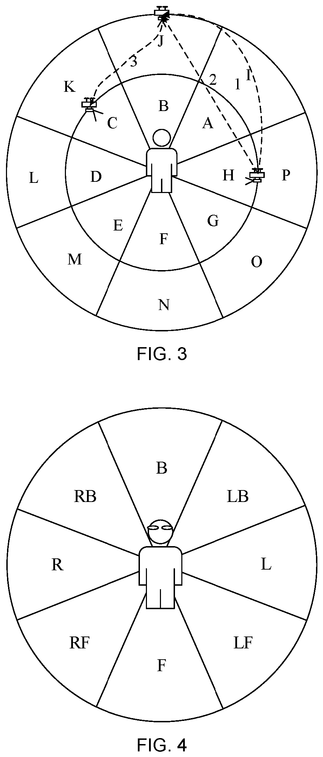

Referring to FIG. 3, the first relative distance and the first relative orientation in FIG. 3 can be the position at the arc boundary of the H region in FIG. 3. The second relative distance and the second relative orientation can be the position at the outer arc boundary of the J region in FIG. 3. The movable platform, during the process of following the target, can move from the first relative distance and the first relative orientation with a receding trajectory toward the second relative distance and the second relative orientation. The relative distance between the movable platform and the target gradually increases from the first relative distance to the second relative distance. Subsequently, the movable platform maintains the second relative distance and the second relative orientation. On one hand, the movable platform can capture the target at different relative distances and relative orientations. On the other hand, during the process of changing the relative distance and relative orientation, the movable platform can generate operational effects similar to approaching, receding, or circling, thereby enriching the motion trajectory when capturing the target.

It should be noted that the terms "receding" or "approaching" in the embodiments of this application are intended to express the effect that, during the process of switching the following distance and following orientation, the relative distance between the movable platform and the target increases or decreases compared to before the switch. For example, for a receding camera trajectory, during the process of switching the following distance and following orientation, the relative distance between the movable platform and the target may gradually increase, or it may gradually decrease in certain stages and gradually increase in the remaining stages. Among these, the camera trajectory that gradually increases overall has a better camera effect compared to the latter, which first decreases and then increases. The camera trajectory for approaching is similar.

It should be understood that the above-mentioned Steps 101-103 may constitute at least part of the stages in the process of the movable platform following the target. The movable platform, during the process of gradually moving from the first relative distance and the first relative orientation to the second relative distance and the second relative orientation, may maintain the second relative distance and the second relative orientation for a certain duration before continuing to change the relative distance and relative orientation with respect to the target.

It should be noted that some embodiments of this application take one stage of the process of controlling the movable platform to follow the target as an example. That is, the description focuses on the movable platform switching from following the target at the first relative distance and the first relative orientation to following the target at the second relative distance and the second relative orientation, and it does not limit the movable platform to only switching between two relative distances and relative orientations during the process of following the target. In practical applications, the movable platform can be set to switch between more than two relative distances and relative orientations based on actual needs. For example, the movable platform can be controlled to switch between three relative distances and relative orientations. First, control the movable platform to maintain the first relative distance and the first relative orientation to follow the target; then, control the movable platform to move toward or away from the target based on the target trajectory from the first relative distance and the first relative orientation and follow the target at the second relative distance and the second relative orientation; subsequently, control the movable platform to move toward or away from the target based on the target trajectory from the second relative distance and the second relative orientation and follow the target at the third relative distance and the third relative orientation. The target trajectories during the two switching processes may be the same or different. The first relative distance is different from the second relative distance; the first relative orientation is different from the second relative orientation. Additionally, the third relative distance may be the same as or different from the first relative distance and the second relative distance; the third relative orientation may be the same as or different from the first relative orientation and the second relative orientation. In some embodiments, the above method may also include only changing the relative orientation or relative distance with respect to the target during the process of the movable platform following the target. That is, the movable platform can pre-acquire or acquire in real-time one or more relative distances and one or more corresponding relative orientations. The relative distances and relative orientations may include the first relative distance, the first relative orientation, the second relative distance, and the second relative orientation. During the process of following the target, the movable platform may undergo multiple transformations of relative distance and/or relative orientation, which is not limited herein.

It should be noted that the executing entity of Steps 101-103 in the embodiments of this application may be the movable platform or the control device of the movable platform. Alternatively, some of the steps in Steps 101-103 may be executed by the control device of the movable platform, while the remaining steps are executed by the movable platform. For example, Step 101 is executed by the control device of the movable platform, while Steps 102-103 are executed by the movable platform.

Optionally, during the process of changing the relative distance, the relative distance between the movable platform and the target may monotonically increase or monotonically decrease.

In some embodiments, during the process in which the movable platform gradually moves toward the target from the first relative distance and the first relative orientation to the second relative distance and the second relative orientation based on the target trajectory, the relative distance between the movable platform and the target may gradually decrease. During the process in which the movable platform gradually recedes from the target to the second relative distance and the second relative orientation based on the target trajectory from the first relative distance and the first relative orientation, the relative distance between the movable platform and the target may gradually increase. Referring to FIG. 3, taking a stationary target as an example, the movable platform may gradually move along trajectory 1 in FIG. 3. During this process, the relative distance between the movable platform and the target gradually increases. Compared to trajectory 2, where the relative distance between the movable platform and the target first decreases and then increases, trajectory 1 can prevent abrupt changes in the target's proportion in the captured frame between increasing and decreasing, thereby improving the smoothness of the camera motion during shooting.

In other optional embodiments, the movable platform may also gradually move along trajectory 2. Additionally, during the movement along trajectory 2, the movable platform can adjust the focal length to change the size of the target in the captured frame, ensuring smoothness during the camera motion. Alternatively, the movable platform may also move along irregular trajectories such as trajectory 3, which is not limited herein.

Optionally, the movable platform can perform transformations of relative distance and relative orientation based on a preset following strategy.

In some embodiments, controlling the movable platform to gradually move toward or recede from the target based on the target trajectory from the first relative orientation, and maintain the second relative distance and the second relative orientation to follow the target, includes: according to a preset motion following strategy, controlling the movable platform to gradually move toward or recede from the target based on the target trajectory from the first relative orientation, and maintain the second relative distance and the second relative orientation to follow the target.

The motion following strategy can be used to enable the movable platform to cover at least two different relative distances and relative orientations with respect to the target during the process of following the target. That is, the process of the movable platform moving from the first relative distance and the first relative orientation to the second relative distance and the second relative orientation can be regarded as a single switching process indicated by the motion following strategy.

Optionally, the motion following strategy can be used to enable the movable platform to determine a following path that passes through at least two following regions during the process of following the target. Herein, the at least two following regions indicate different relative distances and different relative orientations between the movable platform and the target.

The following path is determined based on the observation data when the movable platform starts following the target, and/or the following path is determined in real-time based on the observation data during the process of the movable platform following the target. Furthermore, to ensure the completeness of the shooting angle and the richness of the camera motion, the motion following strategy can also be used to enable the movable platform to traverse all preset relative orientations and all relative distances throughout the entire process of following the target.

It should be understood that, in other optional embodiments, the motion following strategy can be used to enable the movable platform to adjust the relative distance and relative orientation with respect to the target during the process of following the target, without being limited to determining the following regions as shown in FIG. 3 to 6. For example, the motion following strategy can be used to enable the movable platform to continuously or seamlessly adjust the relative distance and relative orientation with respect to the target during the process of following the target, and control the movable platform to maintain any one of the relative distances and relative orientations, which is not limited herein.

Referring to FIG. 4, in some embodiments, all relative orientations may be a plurality of preset relative orientations, including front, rear, left, right, left-front, left-rear, right-front, and right-rear. Each orientation has a preset angle range, which can be specifically determined based on actual conditions.

Furthermore, as shown in FIG. 4, the target can be taken as the center, with different radii dividing different relative distances; and different relative orientations at the same relative distance can be divided by the center angle.

Optionally, to further enhance the richness of the camera motion, the motion following strategy can also be used to ensure that, during the process of the movable platform following the target, the following regions of two consecutive switches correspond to different following distances and/or following orientations.

Referring to FIG. 3, the A-P region in FIG. 3 may be regarded as a following region. It should be understood that different following regions correspond to different relative distances and/or relative orientations. Moreover, the same region may indicate one or more relative distances and relative orientations. When the target is in motion, the geographical location of the following region may change with the movement of the target. The following path may be a path formed by connecting multiple following regions. For ease of explanation, the following is an example in which a following region corresponds to a relative distance and relative orientation with respect to the target.

In FIG. 3, with the target as the center, different positions on the circle have the same relative distance to the target. For example, the arc boundary of regions AH has the same relative distance to the target; the arc boundary of regions I-P has the same relative distance to the target. Meanwhile, regions A and I have the same relative orientation with respect to the target; regions B and J have the same relative orientation with respect to the target. To enable the camera motion to simultaneously achieve receding, approaching, and circling during the switching of following regions, the movable platform can perform switching by transitioning from A to J and/or from A to K, among other methods.

In some embodiments, during the process in which the movable platform switches from a first relative distance and a first relative orientation to a second relative distance and a second relative orientation, a motion following strategy determines a target following region from a plurality of candidate following regions. The plurality of candidate following regions respectively indicate different relative distances and different relative orientations with respect to the target; the target following region indicates the second relative distance and the second relative orientation with respect to the target. The target following region is associated with at least environment information and/or historical following information.

In order to avoid the problem of monotonous shooting images caused by repeated relative orientation and/or relative distance between the movable platform and the target during the process of following the target, the motion following strategy may instruct the movable platform to determine the following region during the following process based on historical following information of the target.

The historical following information may include at least one of a historical following direction, a historical following distance, and a historical following trajectory of the movable platform during the process of following the target. It should be understood that the historical following information may include the following information of the movable platform currently following the target (i.e., after the following is triggered). The historical following information may further include at least part of the following information of the movable platform during the execution of a following task before following the target. Specifically, it may be set according to the actual needs of the user.

Optionally, in order to further enhance the diversity of camera movement modes, switching between different following regions tends to adopt different deflection angles and deflection directions.

In some embodiments, the motion following strategy may also be used to enable the movable platform to perform differentiated angle switching when following the target. Specifically, when switching from a first following region to a second following region in a current instance, the movable platform forms a deflection angle relative to the target; when subsequently switching from the second following region to a third following region, the deflection angle and/or deflection direction of the movable platform relative to the target is different from that of the previous instance. This can further improve the camera movement effect.

Taking FIG. 3 as an example, the deflection angle of the movement of the movable platform from H to J is approximately 90°. The deflection angle of the movement of the movable platform from J to K is approximately 45°. The deflection directions of H-J and J-K are both counterclockwise.

Further, each time the movable platform switches the following region, both the deflection angle and the deflection direction may be different; or each time the movable platform switches the following region, either the deflection angle or the deflection direction is different. In this way, it can be further ensured that the movable platform can have more trajectory variations during the process of following the target. This can further increase the richness of the camera movement.

In order to enhance the aesthetic effect of shooting the target during the process of the movable platform following the target, the motion following strategy may also be used to instruct the movable platform to determine the next following region based on surrounding environment information.

The environment information may be obtained by a shooting device mounted on the movable platform, or the environment information may be obtained by perception sensors of the movable platform. Specifically, the environment information may be environment information surrounding the movable platform; the environment information may also be environment information surrounding the target. The environment information may be in the form of environmental images, environmental semantics, etc. The environment information may include at least one of the following: environment openness information; obstacle information; shooting element information; aesthetic evaluation information.

In some embodiments, the movable platform may obtain surrounding environment information. The environment information may include obstacle information and/or environment openness information. The obstacle information may include information on the number of obstacles and/or information on the distance between the obstacles and the movable platform. In this way, the movable platform can determine the number and proximity of obstacles in the following region based on the obstacle information. The environment openness information may include information on the number of obstacles and/or information on the distribution of obstacles. In this way, the movable platform can determine whether the distribution of obstacles in the following region is sparse or dense based on the environment openness information.

In some embodiments, the movable platform may perform global and local following path planning under the instruction of the motion following strategy. The coverage range of the global path planning may be greater than that of the local path planning; the accuracy of the global path planning may be lower than that of the local path planning. By way of example, during the global path planning process, the motion following strategy may determine an approximate following region based on the environment openness information; when the movable platform moves to a following region that can be covered by the local path planning, it further determines the following region based on the obstacle information of the environment, so as to improve the safety of the planned following path.

Determining the next following region based on the above information can make the next following region a following region with no obstacles or few obstacles. Further, each switched following region can be a following region with no obstacles or few obstacles, so that the following path of the movable platform when following the target is a path through an environment with fewer obstacles, thereby improving the safety when following the target. Furthermore, it can also reduce the obstruction of obstacles to the shooting image, improving the shooting effect.

Optionally, the motion following strategy may also be used to instruct the movable platform to determine the next following region based on aesthetic evaluation information.

In some embodiments, the environment information may further include aesthetic evaluation information. The aesthetic evaluation information is used to indicate the aesthetic evaluation of the following region and/or the aesthetic evaluation during shooting in the following region. Specifically, the aesthetic evaluation information may be obtained by inputting semantic information of the environmental images into a pre-trained model and preset strategies. The pre-trained model and preset strategies may specifically be levels or scores. Meeting the preset aesthetic evaluation can be understood as being higher than the preset level or score.

Optionally, the aesthetic evaluation information may be determined based on at least one of the distribution rules of shooting elements, symmetrical composition rules, and clutter rules.

The distribution rules of shooting elements are used to indicate that different types of shooting elements can be distributed adjacently in the shooting image according to a preset distribution order. The symmetrical composition rules are used to indicate that the same shooting elements can be symmetrically distributed in the shooting image. The clutter rules are used to indicate that the quantity of different types of shooting elements is below a threshold.

Taking aesthetic evaluation information including aesthetic scores as an example, in specific embodiments, the semantic recognition results of the environmental image can first be input into a scoring model to generate a basic score; then, according to the distribution rules of shooting elements, the symmetrical composition rules, and the clutter rules, the basic score is adjusted to obtain a comprehensive aesthetic score.

The shooting element distribution rules can score based on the shooting elements distributed in the captured image. For example, if the three categories of sky, mountain, and river are distributed adjacently in the upper, middle, and lower parts, it is considered a positive example scene that conforms to this rule, and points are added to the basic score; the symmetrical composition rules can score based on whether the composition is symmetrical. For example, if the mountain peaks are symmetrical left and right in the image, it is considered a positive example scene that conforms to this rule, and points are added to the basic score; the clutter rules can score based on whether the captured image is cluttered. For example, if there are too many shooting elements and they are cluttered in the image, it is considered a positive example scene that conforms to this rule, and points are subtracted from the basic score. It should be understood that the captured image mentioned here can be one or more angle images around the movable platform obtained by one or more visual sensors of the movable platform. The captured image can also be an image taken of the target when the movable platform is predicted to be in the following region. The specific strategy can be determined according to the actual scene and is only exemplified herein.

The next following region can be determined based on the above information so that the next following region conforms to the preset aesthetic evaluation. Furthermore, each switched following region can conform to the preset aesthetic evaluation, thereby making the images captured by the movable platform while following the target more consistent with the aesthetic evaluation, further improving the shooting effect.

In some embodiments, the aesthetic evaluation information can be preset by the user. For example, the user can input the required aesthetic evaluation information before or during following the target, such as symmetrical composition, the rule of thirds composition, and shooting elements to be included, etc. In some embodiments, the user can select from preset aesthetic evaluation templates. The aesthetic evaluation templates can include preferred composition forms, preferred shooting elements, and the like. The movable platform can select the following region based on the aesthetic evaluation template so that each switched following region can conform to the preset aesthetic evaluation.

Optionally, the motion following strategy can also be used to instruct the movable platform to determine the next following region based on shooting element information.

The shooting element information can be determined in real time based on image information acquired by the movable platform. Specifically, the environmental image acquired by the movable platform can be recognized and analyzed based on semantic recognition and other methods to determine the shooting element information. The shooting element information can include the types, quantities, and distribution information of shooting elements in the following region. Specifically, the shooting elements can be elements contained in the following region, or elements contained in the captured image taken by the movable platform while following the target in the following region.

Exemplarily, shooting elements can include scene types, such as mountains, sea, lakes, roads, etc.; shooting elements can also include the target; shooting elements can further include movable targets other than the target, such as animals, vehicles, boats, and so on.

In some embodiments, the shooting element information can be preset by the user. For example, before following the target, the user can manually input the target shooting elements. The movable platform can prioritize moving to following regions that have the target shooting elements or can capture the target shooting elements during the process of following the target.

Optionally, the motion following strategy can also be used to enable the movable platform to select the target trajectory for switching during the process of switching from the previous following region to the next following region to follow the target. The target trajectory includes approaching or receding. Among them, the approaching and receding trajectories can refer to the above embodiments and the explanatory description in FIG. 3.

Optionally, the motion following strategy can be used to instruct the determination of priority information for each following region. The priority information can be comprehensively determined based on one or more of the above-mentioned pieces of information.

In some embodiments, the motion following strategy can be used to instruct that the following region with the highest priority is the target following region and instruct the movable platform to proceed to the target following region.

In some embodiments, in the case where the target following region is associated with historical following information, the priority information of the following region can satisfy at least one of the following:
The priority of a following region located at a historical following orientation is lower than the priority of a following region not located at a historical following orientation. The priority of a following region located at a historical following distance is lower than the priority of a following region not located at a historical following distance. When switching from the first following region to the second following region, the priority of the movable platform's deflection angle relative to the target compared to the deflection angle and/or deflection direction of the movable platform relative to the target when subsequently switching from the second following region to the third following region is higher if they are different than if they are the same.

In some embodiments, in the case where the target following region is associated with environmental information, the priority information of the following region satisfies at least one of the following:
The priority of a following region with high openness is higher than the priority of a following region with low openness;
The priority of a following region with no obstacles or few obstacles is higher than the priority of a following region with obstacles or many obstacles;
The priority of a following region where shooting elements exist is higher than the priority of a following region where shooting elements do not exist;
The priority of a following region with a high aesthetic score is higher than the priority of a following region with a low aesthetic score.

It should be understood that the priority information can be preset by the user and/or obtained through real-time calculation.

In some embodiments, the user can select preferred shooting orientations, shooting angles, shooting elements, and the like before or during following the target; the motion following strategy can instruct adjusting the priority of the following region based on the user's preferred information.

Optionally, the target following region can also be associated with the dwell time of the current following region.

In some embodiments, the longer the dwell time of the current following region, the lower the priority of the current following region. When the priority of the current following region is lower than that of other following regions, the movable platform is instructed to switch the following region.

In some embodiments, the dwell time of the movable platform in the current following region satisfies any one of the following:
The dwell time of the movable platform following the target in a following region with high openness is longer than the dwell time of the movable platform following the target in a following region with low openness;
The dwell time of the movable platform following the target in a following region with few obstacles is longer than the dwell time of the movable platform following the target in a following region with many obstacles;
The dwell time in a following region where shooting elements exist is longer than the dwell time in a following region where shooting elements do not exist;
The dwell time in a following region with a high aesthetic score is longer than the dwell time in a following region with a low aesthetic score.

Of course, in other optional embodiments, the dwell time of the current following region can also be a fixed value, such as 5s, 10s, 15s, etc. The movable platform can switch to the next following region after following in the current following region for a fixed time.

In some embodiments, considering the impact of obstacles on the safety of the movable platform during the process of following the target, the above method can further include at least one of the following:
When the dwell time of the current following region is less than a preset threshold, if the openness of the current following region is higher than the preset threshold, the movable platform is controlled to remain in the current following region to follow;
When the dwell time of the current following region is less than the preset threshold, if the openness of the current following region is lower than the preset threshold, the movable platform is controlled to move to a following region with openness higher than the preset threshold;
When the dwell time of the current following region is greater than or equal to the preset threshold, if there exists a following region with openness higher than the preset threshold, the movable platform is controlled to move to the following region with openness higher than the preset threshold;
When the dwell time of the current following region is greater than or equal to the preset threshold, if there does not exist a following region with openness higher than the preset threshold, the movable platform is controlled to remain in the current following region to follow the target until a following region with openness higher than the preset threshold appears.

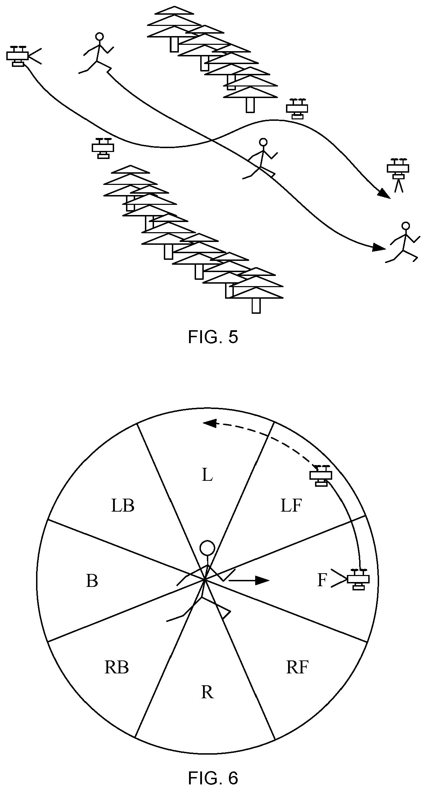

Exemplarily, referring to FIG. 5, when the target passes through a wooded area in FIG. 5, the movable platform can first remain in the area on the right side of the target without trees (which can be regarded as an obstacle) to follow; after trees appear on the right side of the target, the movable platform can switch and remain in the area on the left side of the target without trees to follow. In this way, the movable platform can avoid accident risks caused by following in the wooded area. If the surroundings of the target are all wooded areas, the movable platform can prioritize remaining in the current area for safe flight to ensure safety; after leaving the wooded area, the movable platform then begins to switch relative orientation and relative distance.

In this way, when the current following region has many obstacles, the movable platform prioritizes selecting a more open following region to follow, ensuring the safety of following. When all following regions in the current environment have many obstacles (such as wooded areas or building zones), the movable platform is controlled to first remain in the current following region to ensure the safety of following. When the current following region is relatively open, the dwell time of the current following region reaches the preset threshold, and there exist other relatively open following regions, the platform switches to other relatively open following regions to enhance the richness of camera movement while ensuring safety.

Optionally, the relative orientation between the movable platform and the target can be determined based on the state of the target, to ensure that during the following process, the relative orientation between the following region and the target remains consistent with the state of the target.

In some embodiments, the relative orientation between the movable platform and the target can be determined based on the orientation of the target.

Exemplarily, referring to FIG. 4, when the target is in a stationary state as shown in FIG. 4, the orientation directly facing the target can be the forward orientation.

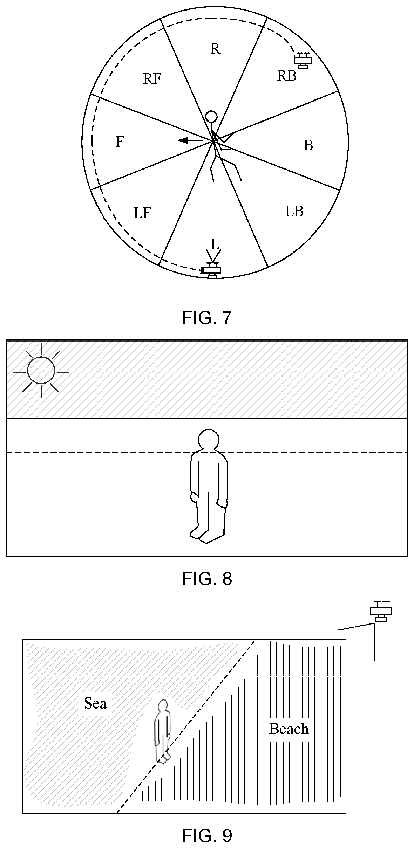

In some embodiments, the relative orientation between the movable platform and the target can be determined based on the movement direction of the target. Exemplarily, referring to FIGS. 6 and 7, the targets in FIGS. 6 and 7 are in motion states; in FIG. 6, the target's orientation and movement direction are the same, while in FIG. 7, the target's orientation and movement direction are opposite. In this embodiment, the orientation indicated by the target's movement direction can be the forward orientation.

In some embodiments, when it is detected that the target is in a moving state, the relative orientation between the movable platform and the target can be determined based on the movement direction of the target. When it is detected that the target is in a stationary state, the relative orientation between the movable platform and the target can be determined based on the orientation of the target. It should be understood that the target being in a stationary state means the position of the target remains unchanged, while the orientation of the target can still change. Since in the stationary state there is a greater tendency to capture the user's facial expression and frontal actions, the shooting direction can be determined based on the user's orientation; while in the moving state there is a greater tendency to capture the user's motion state, the shooting direction can be determined based on the user's movement direction. In this way, the movable platform can determine how to judge the relative orientation with the target based on the target's state. This can reduce the disharmony of camera movement caused by changes in the target's orientation or movement direction during the following shooting process, thereby improving the quality of the final footage/film. Optionally, the target's stationary or moving state can be detected based on the captured images or other sensors.

Further, when the movable platform is in the process of switching the following region, if the state of the target changes, the movable platform can adjust the target following region after switching in real time based on the change in the target's state.

In some embodiments, controlling the movable platform to gradually move toward or gradually recede from the target based on the target trajectory from a first relative orientation, and to follow the target while maintaining a second relative distance and a second relative orientation, includes:
adjusting, in real time, the target trajectory based on the movement direction or orientation of the target.

Specifically, if the movement direction of the target changes, the second relative orientation can be re-determined based on the current movement direction of the target; or, if the orientation of the target changes, the second relative orientation can be re-determined based on the current orientation of the target;
Based on the re-determined second relative orientation, the target trajectory is adjusted.

Exemplarily, in some embodiments, if the orientation or movement direction of the target deflects by 180 degrees, the movable platform is controlled to circle the target half a turn with the current relative distance between the movable platform and the target as the radius, and then continue to follow the target. During the circling process, the target continuously remains within the images captured by the movable platform's shooting device.

Referring to FIG. 6 and 7, the target moves to the right in FIG. 6, and at this time, the movable platform follows in front of the target. If, during the process of switching to follow the target on the left side (for example, the movable platform moves to the LF orientation in FIG. 6), the movement direction of the target changes as shown in FIG. 7, the movable platform can determine the relative orientation with the target in real time based on the movement direction of the target and adjust the target trajectory to move to the relative orientation corresponding to the target's movement direction.

Further, to ensure the continuity of camera movement, in some embodiments, the movable platform can ensure movement in the original direction when switching relative orientation during the real-time adjustment of the target trajectory, so as to avoid the disharmony caused by back-and-forth camera movement during the switching of relative orientation.

Optionally, the movable platform can be an aircraft. The aircraft can change the relative distance to the target by changing its altitude/height.

In some embodiments, the relative distance can include a horizontal relative distance and/or a vertical relative distance.

Accordingly, controlling the movable platform to gradually move toward or gradually recede from the target based on the target trajectory from a first relative distance and a first relative orientation can include:
Control the movable platform to gradually move from the first relative distance to the second relative distance along the horizontal direction and/or vertical direction, while controlling the movable platform to gradually move from the first relative orientation to the second relative orientation.

In some embodiments, the first relative distance can include a first horizontal relative distance and a first vertical relative distance; the second relative distance can include a second horizontal relative distance and a second vertical relative distance. The first horizontal relative distance can correspond to the first vertical relative distance, and the second horizontal relative distance can correspond to the second vertical relative distance, so that the movable platform can change both the horizontal relative distance and the vertical relative distance simultaneously. Furthermore, the size relationship between the first horizontal relative distance and the second horizontal relative distance can be the same as the size relationship between the first vertical relative distance and the second vertical relative distance, so that during the simultaneous change of the horizontal relative distance and the vertical relative distance, the overall relative distance of the movable platform shows a trend of increase or decrease, thereby enhancing the coordination of camera movement.

In some embodiments, during the process of the movable platform following the target, the horizontal relative distance and the vertical relative distance can also be controlled separately. That is, the aircraft can perform approaching or receding movement relative to the target along the horizontal direction. The aircraft can also perform approaching or receding movement relative to the target along the vertical direction simultaneously or separately, thereby increasing the movement dimensions during camera operation, further enriching the camera movement modes and improving the shooting effect. It should be understood that the movement mode of the aircraft in the vertical direction can be similar to the movement mode in the horizontal direction shown in FIG. 3 to 7. To avoid repetition, it will not be elaborated herein.

In some embodiments, the aircraft can also determine terrain undulation based on real-time recognition of the scene below during the following process and adjust altitude/height according to the terrain undulation.

Of course, in other optional embodiments, the movable platform can include a height-adjustable load mechanism. While the movable platform changes the relative orientation and horizontal relative distance to the target through movement, the load mechanism adjusts the vertical relative distance between the shooting device and the target. Similarly, this can also achieve the effect of enriching camera movement modes.

As described above, the movable platform can shoot the target during the process of following the target. That is, the movable platform can be equipped with an shooting device to achieve the "follow shooting" function.

In some embodiments, the above method can further include: controlling the shooting device mounted on the movable platform to shoot the target during at least a portion of the time period when the movable platform is following the target.

It can be understood that outside at least a portion of the time period when the movable platform is following the target, the shooting device can only obtain real-time monitoring images of the target without performing photographing, recording, or other operations on the target; or, the shooting device can also shoot objects other than the target, which is not limited herein.

To ensure the shooting effect of the target, in some embodiments, controlling the shooting device mounted on the movable platform to shoot the target can include: controlling the target to be roughly located at the center of the shooting device's captured image.

Of course, in some embodiments, during at least a portion of the time when the movable platform is following the target, based on changes in the relative distance and relative orientation between the movable platform and the target, the shooting device mounted on the movable platform can be controlled to change the shooting direction, so that the relative position of the target in the captured image changes. In this way, the movable platform can achieve different composition styles during shooting.

The relative position of the target in the captured frame can include horizontal relative position and vertical relative position. In some embodiments, the relative position of the target in the captured frame can change based on the relative orientation between the target and the movable platform. For example, in a specific implementation, the target can be horizontally centered in the captured frame; if the relative angle between the target's orientation or movement direction and the movable platform is greater than 45°, the captured frame uses a vertically centered composition; if the relative angle between the target's orientation or movement direction and the movable platform is less than 30°, the captured frame uses a lower-third composition in the vertical direction; if the relative angle between the target's orientation or movement direction and the movable platform is between 30° and 45°, the captured frame uses a linear transition composition between vertically centered and lower-third in the vertical direction. In this way, adjusting the target's position in the captured frame in real-time based on the relative orientation between the target and the movable platform can make the final footage have more cinematic language, richer effects, and better align with the user's aesthetic preferences.

In some embodiments, during at least part of the time period when the movable platform follows the target, the shooting direction of the shooting device mounted on the movable platform can also be controlled to change based on the target's movement direction. This allows the distance from the target along its movement direction to the boundary of the captured frame to be greater than the distance from the target along the direction opposite to its movement to the other boundary of the captured frame. At the same time, this achieves a "blank space" in the captured frame along the target's movement direction during its motion, making the final footage more aligned with the user's aesthetic preferences while also reducing the likelihood of the target moving out of the captured frame due to excessive movement amplitude.

In some embodiments, the movable platform can also adjust the target's position in the captured frame by changing the relative orientation and/or relative distance. Of course, in other optional embodiments, the user can also manually control the shooting device and/or the movable platform during the process of the movable platform following the target to adjust the composition.

Optionally, during at least part of the time period when the movable platform follows the target, the shooting direction of the shooting device mounted on the movable platform can also be controlled to change based on environmental information acquired by the movable platform, so as to achieve richer final footage effects by utilizing different scenes/shooting elements in the environment while capturing the target.

In some embodiments, the above method may further include:
When the environmental information obtained by the movable platform indicates the presence of a target shooting element in the environment, controlling the movable platform to perform at least one of the following to ensure that the target shooting element is present in the captured frame during at least part of the time period when the movable platform follows the target: changing the relative distance to the target; changing the relative orientation to the target; changing the shooting direction of the mounted shooting device. The target shooting element can be obtained based on environmental information, including, for example, one or more of mountains, water, people, vehicles, or boats. The target shooting element can be specifically pre-set by the user or determined in real-time by the movable platform based on environmental information. The environmental information can refer to the explanations provided in the above embodiments and will not be repeated herein.

For example, referring to FIG. 8, in a specific implementation, during the process of the movable platform following the target, if the user desires to capture more sky, the movable platform can be controlled to perform at least one of the following when the environmental information acquired by the movable platform indicates that the upper part of the captured frame of the shooting device is sky, so that most of the target is positioned in the lower half of the captured frame: changing the relative distance to the target; changing the relative orientation to the target; changing the shooting direction of the mounted shooting device. This ensures that the shooting element "sky" can be included in the captured frame while filming the target.

Referring to FIG. 9, in a specific implementation, during the process of the movable platform following the target, if the user wishes to capture both the seaside and the beach while filming the target, the movable platform can be controlled to perform at least one of the following when the environmental information acquired by the movable platform indicates the presence of the seaside and beach in the environment, so that the seaside and beach are respectively located on both sides of the target in the captured frame with roughly equal proportions: changing the relative distance to the target; changing the relative orientation to the target; changing the shooting direction of the mounted shooting device. This allows multiple target shooting elements to be distributed in the captured frame according to a specific composition method (e.g., symmetrical distribution, concentrated distribution, etc.) when multiple target shooting elements are present, achieving specific composition forms such as symmetrical composition.

Optionally, the movable platform can also adjust the target's position in the captured frame based on aesthetic evaluation information.

In some embodiments, the controlling of the shooting device mounted on the movable platform to change the shooting direction may include: based on the aesthetic evaluation information corresponding to the environmental information, controlling the movable platform to perform at least one of the following to ensure the captured frame meets preset aesthetic evaluation criteria: changing the relative distance to the target; changing the relative orientation to the target; changing the shooting direction of the mounted shooting device. The aesthetic evaluation information can refer to the explanations provided in the above embodiments and will not be repeated herein.

For example, the movable platform may be equipped with multiple visual sensors to capture omnidirectional environmental images (e.g., above, below, left, right, front, and back). Based on the aesthetic scores corresponding to these environmental images, the image with the highest aesthetic score is identified. The captured frame is then adjusted using the aforementioned methods to include the environmental image with the highest aesthetic score. This approach ensures that the composition of the movable platform's captured frame better aligns with the user's aesthetic preferences, further enhancing the quality of the final footage.

As described above, during the process of following the target, the movable platform can capture footage of the target during certain time periods while also filming the surrounding environment, excluding the target, during other time periods. This means that the target is not present in the captured frame during some intervals, creating an "empty shot" effect. This approach reduces the frequency of monotonous scenes and enhances the overall quality of the final footage.

In some embodiments, after the movable platform follows the target to capture a first image sequence, the shooting direction and/or shooting position of the movable platform is adjusted to capture a second image sequence corresponding to the current environment. Subsequently, the shooting direction and/or shooting position of the movable platform can be readjusted to continue following the target and capture a third image sequence.

Optionally, the movable platform can employ various methods to follow the target. In some embodiments, the movable platform can track the target using image information obtained from the mounted shooting device. In other embodiments, the movable platform can follow the target using image information acquired from other visual sensors.

Since capturing an "empty shot" may cause the target to move out of the shooting device's captured frame, the movable platform can no longer track the target based on the shooting device. In some embodiments, when the target is outside the shooting device's captured frame, the movable platform can be controlled to follow the target based on location information from an electronic device carried by the target. Specifically, the location information from the electronic device carried by the target may include GPS, GLONASS, or similar data.

In other optional embodiments, when the target is outside the shooting device's captured frame, the movable platform can be controlled to follow the target based on data acquired from the movable platform's perception sensors. These perception sensors may include one or more of a fisheye camera, LiDAR, 3D-TOF, or similar technologies.

The movable platform can initiate capturing the target at any moment during the tracking process. In some embodiments, during at least part of the time the movable platform follows the target, the shooting device mounted on the movable platform is controlled to capture the target, including at least one of the following: while the movable platform maintains a first relative orientation and a first relative distance, controlling the shooting device to capture a first image sequence of the target; while the movable platform maintains a second relative orientation and a second relative distance, controlling the shooting device to capture a second image sequence of the target; during the process of the movable platform gradually moving from the first relative orientation and first relative distance to the second relative orientation and second relative distance, controlling the shooting device to capture a third image sequence of the target. This approach ensures that the final footage includes image sequences captured during parallel tracking, as well as sequences filmed during approaching or receding camera movements, thereby enhancing the richness of the final footage.

Furthermore, after completing the tracking of the target, the image sequences captured by the shooting device mounted on the movable platform are processed to obtain the target image sequence. Specifically, intelligent editing functions such as semantic recognition can be used to edit the image sequences, resulting in higher-quality final footage. During the editing process, the selection of material can be based on at least one of the historical trajectory information, environmental information, aesthetic evaluation information, or shooting element information. For example, in some embodiments, during the process of capturing image sequences, the movable platform can add semantic information to the image sequences based on its motion trajectory, the relative orientation/relative distance to the target. For instance, a semantic tag "receding" can be added when performing a receding motion, or a semantic tag "rear" can be added to image sequences captured when the movable platform is positioned behind the target. In some embodiments, the movable platform can also add semantic tags to the captured image sequences upon recognizing target shooting elements. This facilitates achieving intelligent editing effects in subsequent processing based at least on these semantic tags.

In the embodiments of this method, the target trajectory for controlling the movable platform to move from a first relative orientation and a first relative distance to a second relative orientation and a second relative distance can be determined based on actual needs.

In some embodiments, the target trajectory can be determined based on user input operations. These input operations (including the first input, second input, etc., as mentioned below) include, but are not limited to, user interactions with physical or virtual controls on a control device, such as touch inputs (single tap, double tap, swipe) or non-touch inputs (voice, gestures), and are not limited herein.

In some embodiments, the target trajectory can be determined based on the relative relationship between the first relative position of the movable platform and the target and the second relative position corresponding to the target point, where different relative positions correspond to different relative distances and/or relative orientations. In some embodiments, when the relative distance between the first relative position and the second relative position is less than a first preset threshold, the movable platform switches from the first relative position to the second relative position to follow the target according to a first preset trajectory type. When the relative distance between the first relative position and the second relative position is greater than or equal to the first preset threshold, the movable platform switches from the first relative position to the second relative position to follow the target by combining the first preset trajectory type with a second preset trajectory type, where the first preset trajectory type and the second preset trajectory type are different.

In some embodiments, the target trajectory is determined based on at least one target point input by the user on the target interface. In some embodiments, the target trajectory is determined based on a trajectory input by the user. In some embodiments, the trajectory input by the user is used to determine a start point and/or an end point of the target trajectory. In some embodiments, the trajectory input by the user is used to determine an orientation of the target trajectory. In some embodiments, the target trajectory is determined based on an input of the user to at least one physical control on a control device. In some embodiments, the physical control includes at least one of a mechanical button, an electronic button, a joystick, a dial, or a code disc. In some embodiments, one physical control corresponds to at least a relative distance and/or a relative orientation. In some embodiments, the target trajectory is a combination of one or both of a curve and a straight line.

The following will take a specific exemplary embodiment in which the movable platform is an aircraft as an example to elaborate in detail the implementation process of the embodiment of the method:

### (1) Following parameters

The following problem can be modeled as the target position, the target velocity vector, and three key following parameters: following altitude, following horizontal distance, and following horizontal angle. In the following problem, a unique desired position of the aircraft can be determined based on the target position as well as the following altitude, following horizontal distance, and following horizontal angle. A trajectory can be generated based on the target position and the target velocity vector. A unique desired position of the aircraft can be determined according to the following horizontal distance, following horizontal angle, and following altitude/height.

### (2) Trajectory generation

As shown in FIG. 3, with the target as the center, the space is divided into a double compass. The double compass is divided into an inner ring and an outer ring. The horizontal distance range between the inner ring and the target, the horizontal distance range between the outer ring and the target, the relative altitude range between the inner ring and the target, and the relative altitude range between the outer ring and the target can all be set. The horizontal plane is divided into 16 angular regions, with 8 angular regions each in the outer ring and the inner ring, and each angular region can have a range of 45°.

Under the modeling of the parameter space, a point in three-dimensional Euclidean space can be converted into three parameters, so in the trajectory generation problem, the state quantity is: (relative horizontal distance, relative horizontal angle, relative altitude/height). This new state quantity is used to replace the original (x, y, z) state point. Then, if the state point and its corresponding target information are known, the Euclidean space state point can be inversely calculated.

When the user selects a region to be followed by the aircraft on the input interface, the camera movement strategy module generates a smooth trajectory through a boundary value problem (BVP), and the aircraft needs to automatically select the desired region of the aircraft according to environmental information, shooting angle, and shooting distance and altitude information.

The function of the camera movement strategy module is to generate a smooth parameter trajectory without obstacle avoidance. During the generation process, it is necessary to consider information such as the density of the environment and the shooting angle in order to determine the state of the aircraft.

The state of the aircraft can be divided into three types: Switch, Keep, and Safe.
Switch: the aircraft is currently switching direction;
Keep: the aircraft is currently maintaining the current direction for following;
Safe: due to the surrounding environment being too dense, the primary task of the aircraft is to ensure safety rather than switching or maintaining direction.

### (3) Camera movement strategy

Each following region can have an initial score (n1). Since the front and rear views of the target can capture the main body information of the target in the shooting frame, the scores for the front and rear of the target can be slightly higher than the initial scores for the sides.

Angle score (n2): scored based on the magnitude of the camera movement angle change, with specific scoring as shown in the table below:

| Change in angle | 0° | 45° | 90° | 135° | 180° |
|---|---|---|---|---|---|
| Score | A | B | C | D | E |

Scene scale (inner/outer ring) score: when the next camera movement is within the same ring, n3 = 0; otherwise, n3 = 1.
Camera movement direction score (m1): if the direction is the same as the previous camera movement, m1 = 1; otherwise, m1 = 0.
Environmental complexity score (m2): based on the density of obstacles in the region to be executed- the more open the area, the higher the score.
Total score = (n1 + n2 + n3) + (m1 + m2), and the region with the highest total score is selected as the next region.
Additional strategy: position score decay: to ensure full coverage, each time a region is reached, the position score of that region is halved; position score reset: when it is detected that all positions have been covered, the position scores are reset; angle score decay: to ensure full coverage, each time an angle is executed, the score for that angle is halved; angle score reset: when it is detected that all angles have been executed, the angle scores are reset.

### (4) Aesthetic evaluation

Perform an aesthetic evaluation of each direction around the aircraft's environment, screening for more visually appealing and more film-worthy shooting angles, providing aesthetic score references for the camera movement strategy module to realize more intelligent camera movement decisions adapted to the environment. Specifically, the aesthetic evaluation module consists of three modules: omnidirectional scanning, environment understanding, and aesthetic fusion decision. The process is as follows:
First, the omnidirectional scanning module is responsible for dynamically selecting regions on the environment images collected by the aircraft, then performing environment understanding on the selected regions based on algorithms such as aesthetic scoring and semantic understanding to obtain scores from both overall image and local semantic dimensions. Finally, through the aesthetic fusion decision module, the scores from each dimension are fused to obtain the overall score of the region. By repeating this process, scores of all regions from all viewing angles around the aircraft can be obtained, which are then used for the next step of camera movement planning.

Using the aircraft's camera and visual sensors to perform omnidirectional perception of the environment around the aircraft, obtaining a 360° omnidirectional perception map of the aircraft. The methods for obtaining the omnidirectional image are not limited to: 1) using the aircraft camera to obtain it by controlling the body to rotate one full turn; 2) directly obtaining it through the aircraft's built-in omnidirectional visual sensors; and 3) combining the aforementioned two methods to obtain it.

The environment images obtained by the omnidirectional scanning module serve as the input to the environment understanding module, to extract environment understanding information used for aesthetic judgment. Specifically, the environment understanding module consists of two modules: aesthetic scoring and semantic understanding:
1. Aesthetic Scoring: Using environmental images as input, an overall aesthetic score for the environmental image is obtained through image processing algorithms. A higher score indicates that the area is more visually appealing and has greater potential for photography. The image processing algorithms include, but are not limited to: 1) Neural networks; 2) Traditional image algorithms based on color analysis.
2. Semantic Understanding: Using environmental images as input, fine-grained segmentation of different categories of objects in the local areas of the environmental image is obtained through image processing algorithms, providing high-level semantic information for environmental understanding.

Image processing algorithms include, but are not limited to: 1) Neural networks; 2) Traditional image algorithms based on region segmentation. The segmented categories include mountains, rivers, grasslands, sky, buildings, etc.

The aesthetic fusion decision module is responsible for integrating the output results of multiple environmental understanding submodules to obtain the final comprehensive aesthetic score for camera movement planning.

The aesthetic fusion decision takes the score output by the aesthetic scoring module as the base score. On this basis, the aesthetic fusion decision conducts strategic scoring based on the results of semantic understanding according to aesthetic prior rules, adjusting the base score to ultimately obtain the fused comprehensive aesthetic score. By performing environmental understanding and aesthetic fusion decision on all regions obtained from the omnidirectional scan, the comprehensive aesthetic score for all regions can be obtained. The comprehensive aesthetic scores form an omnidirectional aesthetic scoring map, which is further used for camera movement planning.

### (5) Gimbal Composition

The aircraft may be equipped with a gimbal. The gimbal carries a shooting device, enabling the aircraft to adjust the shooting device's attitude through the gimbal. The gimbal uses aesthetic evaluation to assist with composition. The aesthetic evaluation identifies a suitable target region, and the gimbal then composes the shot by aligning with the center point of the target region. By performing aesthetic evaluation on the forward region of the aircraft (in the direction of the aircraft's nose), the gimbal obtains aesthetic scores for various shooting angles, providing a reference for composition and ultimately achieving a better final shooting effect.

The aesthetic evaluation for gimbal composition considers not only the background environmental information but also the impact of the target object on the composition's aesthetics. Specifically, a target composition position aesthetic recommendation module is added. This module evaluates the position of the target subject in the shooting frame, prioritizing recommendations for shooting perspectives that better highlight the target object and align more closely with composition aesthetics.

Furthermore, the different composition positions of the shooting target (including people, vehicles, etc.) in the frame significantly affect the overall visual appeal and narrative quality of the final shot. Therefore, the aircraft needs to design a target composition position aesthetic recommendation module for evaluating the target composition position. Specifically, the aesthetic recommendation strategies for the target composition position include:
1) Position Recommendation Based on Prior Rules: Adjust the target composition position suitable for the current shooting scenario based on rules accumulated from shooting experience. Specific rules include, but are not limited to:
   a. Default Centered Composition: By default, adjust the target composition position to the center.
   b. Sky Space: When the environmental understanding module determines that the upper part of the frame is sky, prioritize adjusting the target position to the lower 1/3 point of the vertical rule-of-thirds composition.
   c. Space for Target Movement Direction: If the shooting target is currently moving to the right, adjust the target composition position to the left 1/3 point of the horizontal rule-of-thirds composition.

Recommendation Based on Aesthetic Scoring of Different Composition Positions: Perform aesthetic scoring on environmental images with the target at different composition positions using the environmental understanding module, rank the aesthetic scores corresponding to different composition positions, and select the position with the highest score as the recommended composition position.

Choose either the result from strategy 1) or 2), or fuse both to obtain the final recommended target composition position. Based on the highest-scoring region position obtained from the aesthetic evaluation and the recommended target composition position in the frame, the gimbal's attitude and the aircraft's relative position can be uniquely determined.

It should be understood that the above embodiments are merely illustrative explanations and do not constitute limitations on this application.

To facilitate manual control by the user of the relative orientation and relative distance between the movable platform and the target during the process of the movable platform following the target, the embodiments of this application further provide a control method and a control system.

The following will provide a detailed introduction to the control method provided by the embodiments of this application in conjunction with the scenario in FIG. 1. It should be noted that the scenario in FIG. 1 is only used to explain the control method provided by the embodiments of this application and does not constitute a limitation on the application scenarios of the control method provided by the embodiments of this application.

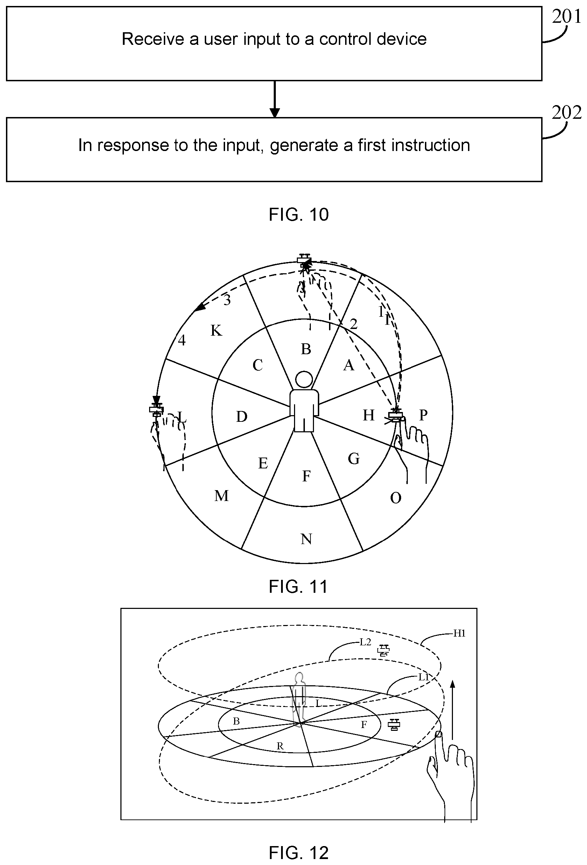

Referring to FIG. 10, FIG. 10 illustrates a control method provided by some embodiments of this application. The control method may include:
Step 201: Receive a user input to a control device.
Step 202: In response to the input, generate a first instruction. The first instruction is used to instruct a movable platform, while maintaining a first relative distance and a first relative orientation to follow a target, to gradually move toward or recede from the target based on the target's trajectory, and maintain a second relative distance and a second relative orientation to follow the target.

The control device can be a remote controller to facilitate the user's remote control of the movable platform's movement. Of course, in other optional embodiments, the control device can also be integrated into the movable platform itself. The user can also act as the driver of the movable platform. The specific configuration can be determined based on the actual application scenario. The user can solely act as the controller to perform control operations or can simultaneously serve as the target for the movable platform to follow and capture.

In this way, the user can change the relative orientation and relative distance between the movable platform and the target based on input to the control device. This enhances the freedom of the motion trajectory during the following process while improving the convenience of interaction with the user.

Furthermore, to facilitate the user in viewing the relative distance and/or relative orientation between the target and the movable platform while controlling the movable platform to change the relative distance and/or relative orientation, the target trajectory can be determined based on the user's input on the target interface displayed on the control device. The target interface is used to indicate the relative distance and/or relative orientation between the target and the movable platform.

In some embodiments, the control device includes a target interface. The control device receiving user input to the control device includes: receiving user input on the target interface. The target interface is used to indicate and/or change the relative distance and/or relative orientation between the target and the movable platform.

For example, the target interface may include a controllable compass area as shown in FIG. 11. The user can view the controllable compass area and control the movable platform through input in the controllable compass area. The compass area may also display the relative position of the user and the movable platform to facilitate user viewing. This can make the interaction between the user and the movable platform simpler and more intuitive.

In some embodiments, the target trajectory can be determined based on at least one target point input by the user on the target interface.

For example, in some embodiments, the target trajectory can be determined based on the current relative position between the movable platform and the target and the relative position indicated by the target point input by the user on the target interface. In some embodiments, the target trajectory can also be determined based on the relative positions indicated by the starting point, endpoint, and intermediate points input by the user.

When the relative distance between the first relative position and the second relative position is less than or equal to a first preset threshold, the target trajectory connects the first relative position and the second relative position using a first preset trajectory type; when the relative displacement between the first relative position and the second relative position is greater than the first preset threshold, the target trajectory connects the first relative position and the second relative position using a second preset trajectory type; where the first preset trajectory type and the second preset trajectory type are different.

In some embodiments, taking the first preset threshold as an angular displacement spanning 4 grid areas as an example, if the angular displacement of the movable platform relative to the target is less than or equal to 4 grid areas, the target trajectory may include only trajectory 1 as shown in FIG. 11. The first preset trajectory type corresponding to trajectory 1 has its starting end tangent to a circle centered on the target with a first radius and its terminal end tangent to a circle centered on the target with a second radius. If the angular displacement of the movable platform relative to the target is greater than 4 grid areas, the target trajectory, as shown in FIG. 11, may include a trajectory formed by connecting trajectory 3 and trajectory 4. Here, the first preset trajectory type corresponding to trajectory 3 has its starting end tangent to a circle centered on the target with a first radius and its terminal end tangent to a circle centered on the target with a second radius. The second preset trajectory type (trajectory 4) coincides with the circle of the first radius or the second radius. The first radius is the first relative distance; the second radius is the second relative distance. In this way, when the target trajectory is relatively long, a combination of trajectories with different trajectory types can be used to form the target trajectory, avoiding the issue of monotonous camera movement during long-distance transitions.
In some embodiments, the target trajectory can also be determined based on the trajectory input by the user.

Specifically, in some embodiments, the user-input trajectory can be used to determine the starting point and/or endpoint of the target trajectory; in some embodiments, the user-input trajectory can also be used to determine the direction of the target trajectory. That is, the movable platform can change the relative orientation with the target according to the direction (clockwise or counterclockwise) indicated by the user-input trajectory. This allows the user to control the movement direction of the movable platform when following the target. As such, it enhances the automation level of follow-and-capture while granting the user freedom in shooting.

In some embodiments, the target interface includes at least two regions. Different regions indicate different relative distances and/or relative orientations; receiving user input on the target interface includes: receiving a first input for at least one region in the target interface; the first instruction is further used to: in response to the first input, control the movable platform to move toward the relative orientation and relative distance indicated by the region corresponding to the user input. Specifically, the distribution of multiple regions in the target interface can be set according to actual needs. In some embodiments, regions indicating different relative distances can be located on circular rings with different radii centered on the target. In some embodiments, regions indicating different relative orientations can be located on a circular ring with the same radius centered on the target.

Referring to FIG. 3, the target interface shown in FIG. 3 includes multiple regions labeled A-P. These regions can be arranged circling the target. The A-H regions and I-P regions can respectively indicate different relative orientations with respect to the target, while the A-I regions and B-J regions respectively indicate different relative distances with respect to the target. By clicking on the corresponding region, the user can enable the movable platform to change its relative position and relative orientation with respect to the target during the process of following the target.

In some embodiments, the at least two regions can include a first region and a second region. Any target point in the first region indicates the same relative distance and/or relative orientation; any target point in the second region indicates the same relative distance and/or relative orientation. Continuing with FIG. 3 as an example, the first region can be the region formed by combining the A-H regions, or it can be the region formed by combining the A region and the I region.

Further, in the case where the relative distances of any target points in the first area are the same, the first instruction is also used for: in the case of receiving input for at least one target point in the first area, in the process of following the target, controlling the movable platform to change the relative orientation between the movable platform and the target based on the relative position of the target point in the first area.

For example, in the case where the first area is composed of areas A-H, if the target point input by the user is located in any area among areas A-H, the movable platform can be controlled to only change the relative orientation corresponding to AH, without changing the relative distance. This enhances the degree of freedom when the user operates.

Similarly, in some embodiments, in the case where the relative orientation of any target point in the first area is the same, the first instruction is also used for: in the case of receiving input for at least one target point in the first area, in the process of following the target, controlling the movable platform to change the relative distance between the movable platform and the target based on the relative position of the target point in the first area. For example, in the case where the first area is composed of areas A and I, if the target point input by the user is located in area A or area I, the movable platform can be controlled to only change the relative distance without changing the relative orientation.

The user can also determine the target trajectory through sliding input across multiple areas on the target interface. In some embodiments, receiving the user's input on the target interface includes:
Receive the user's second input for a first area and a second area, where the second input is a trajectory input;
The first instruction is also used for: responding to the second input. The first instruction controls the movable platform to gradually move from the relative distance and relative orientation indicated by the first area to the relative distance and relative orientation indicated by the second area based on the direction of the trajectory input in the process of following the target. In this way, the user can control the movable platform to gradually move from the first area to the second area through sliding input connecting the first area and the second area. This enhances the degree of freedom when the user manually controls the movable platform to follow the target, thereby providing the user with more automated camera movement options and greatly improving the user experience.

It should be understood that the relative distance and/or relative orientation indicated by different areas can be set by the user. The user can preset them through a task parameter interface before the movable platform follows the target, or can adjust them in real time through control input (such as sliding indication bars, pushing joysticks, etc.) during the process of following the target, which is not limited herein.

As mentioned above, in some embodiments, the movable platform can change the relative orientation and relative distance with the target through the user's manual control input. In some embodiments, the movable platform can also automatically change the relative orientation and relative distance with the target.

In some embodiments, the target interface may also include an automatically executed control. The method further includes: receiving the user's third input for the automatically executed control; in response to the third input, generating a second instruction. The second instruction is used to instruct the movable platform to follow the target according to a preset motion following strategy. The preset motion following strategy is used to enable the movable platform to cover at least two different relative distances and relative orientations with the target during the process of following the target for shooting. The target interface of the control device provides the user with options for manual control and triggering automatic control, further enhancing the user's degree of freedom in following control operations. Among them, the preset motion following strategy can refer to the explanations in the above embodiments, and will not be repeated herein.

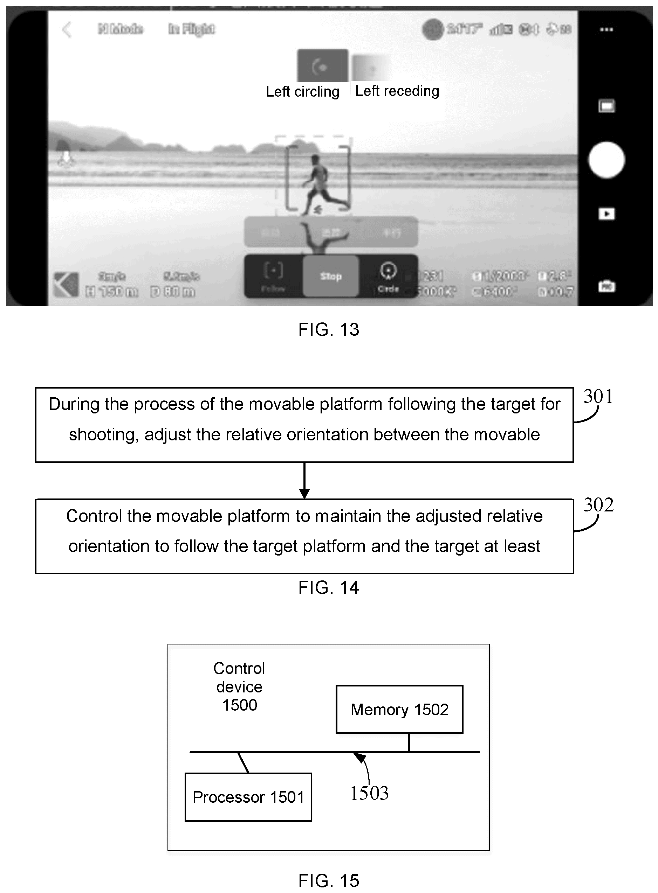

Further, in order to facilitate the user in understanding the motion trend currently indicated by the motion following strategy during the process of the movable platform automatically executing the following task, and to understand the motion trajectory of the movable platform in the process of automatically following the target from a more intuitive perspective, in some embodiments, during the process of the movable platform following the target, the target interface can display motion trend information of the movable platform. Specifically, referring to FIG. 13, the motion trend information can include descriptive information containing relative orientation and relative distance changes such as left approaching, right receding, etc. Of course, in some embodiments, the target interface can also directly identify the current and subsequent following regions of the movable platform.

As above, the relative distance can include horizontal relative distance and vertical relative distance. Therefore, the target interface can also indicate the three-dimensional spatial relationship with the target.

Exemplarily, referring to FIG. 12, the target interface shown in FIG. 12 can contain three-dimensional information and can also display the target's orientation, motion direction, etc. Specifically, reference planes containing different height areas can be generated, such as L1, L2, and H1. Among them, L1 and L2 can be different reference planes generated when tilting based on the same center. Among them, L1 can be a horizontal plane, and the areas it contains indicate the same relative height with the target. While L2 forms an angle with L1, the relative height indicated by the areas it contains can be different from the relative height of the target, similar to the reference plane of satellite/planet circling orbits, thereby further enriching camera movement effects by adjusting different reference planes. While H1 is parallel to L1. H1 represents another reference plane with a different relative height from L1. Users can adjust the tilt angle and/or height of the reference plane through sliding input, and determine areas on different reference planes through point selection input. This achieves simultaneously changing the horizontal relative distance, vertical relative distance, and relative orientation between the movable platform and the target on the target interface, further enhancing the user's degree of freedom in following control operations.

Optionally, the user can also simultaneously change the horizontal relative distance and vertical relative distance by inputting a trajectory. In some embodiments, receiving the user's input on the target interface includes:
Receive the user's trajectory input operation along the target direction on the target interface; the target direction is used to indicate the movable platform to change the horizontal relative distance and vertical relative distance with the target;
The first instruction is also used for: responding to the input operation; the first instruction controls the movable platform to change the horizontal relative distance and vertical relative distance with the target along the target direction while changing the relative orientation with the target. Exemplarily, if the trajectory input by the user is from bottom left to top right, it indicates that the movable platform can move from a low position receding to a high position. The movable platform simultaneously changes the horizontal relative distance and vertical relative distance through the input trajectory, enhancing the convenience during the user interaction process.

Of course, as mentioned above, one horizontal relative distance can also correspond to one vertical relative distance, so that the horizontal relative distance and vertical relative distance can be adjusted synchronously.

Optionally, one control on the control device can correspond to one or more of the relative orientation and relative distance with the target. In some embodiments, receiving the user's input to the control device can include: receiving the user's input to at least one control on the control device; the at least one control is respectively used to change the relative orientation and relative distance between the movable platform and the target;

The at least one control is used to change at least one of the relative orientation, relative horizontal distance, and relative height between the movable platform and the target.

It should be understood that at least one control can include virtual controls on the target interface, can also include physical controls, or can be a combination of both, which will not be enumerated one by one herein. Exemplarily, since displaying two-dimensional information on the target interface is more intuitive, the relative orientation and relative horizontal distance can be changed only through virtual controls on the target interface (such as the compass shown in FIG. 11 or FIG. 12), while the relative height can be changed through joysticks or dials on the control device. The physical controls can include at least one of mechanical keys, electronic keys, joysticks, dials, and code discs.

Optionally, the following parameters and shooting parameters of the movable platform during the process of following the target can also be set by the user, to provide users with more parameter selection space and further enhance the user experience.

In some embodiments, the above method can also include:
Receiving the user's fourth input to the control device;
In response to the fourth input, changing motion parameters of the movable platform during the process of following the target, where the motion parameters include at least one of following speed, following height, and obstacle avoidance detour attitude.

In some embodiments, the above method can also include:
Receiving the user's fifth input to the control device;
In response to the fifth input, changing shooting parameters of the shooting device carried by the movable platform during the process of the movable platform following the target, where the shooting parameters include at least one of shooting orientation, shooting subject, focusing distance, and aperture size.

It should be understood that the above fourth input and/or fifth input can be input to the control device before following the target; the fourth input and/or fifth input can also be input to the control device during the process of following the target.

In addition, for follow shooting, users currently also expect to be able to generate intelligent shooting paths with one click and create finished films with one click. This can also greatly lower the threshold for users to use the movable platform for following operations, enabling users to still achieve good finished effects even when they have less experience in controlling the movable platform.

For this purpose, referring to FIG. 14, the present application also provides a shooting method, including:
Step 301, during the process of the movable platform following the target for shooting, adjusting the relative orientation between the movable platform and the target at least based on environmental information of the environment where the target is located.
Step 302, controlling the movable platform to maintain the adjusted relative orientation to follow the target.

In this way, the movable platform can autonomously adjust the relative orientation between the movable platform and the target based on the environmental information of the environment it is in and perform shooting, reducing the user's operation threshold and enhancing the user experience.

Optionally, the environmental information can include at least one of the following: environmental information of a shooting area preset by the user; environmental information of the environment where the target is located; environmental information of the environment where the movable platform is located.

In some embodiments, the movable platform can automatically move in advance in a shooting area preset by the user before following the target to obtain environmental information of the shooting area. Thus, the movable platform can utilize the environmental information of the shooting area to perform adjustments of the relative orientation with the target during the process of following the target. In some embodiments, the movable platform can also obtain in real time at least one of the environmental information of the shooting area preset by the user, the environmental information of the environment where the target is located, and the environmental information of the environment where the movable platform is located during the process of following the target.

In some embodiments, the user can trigger the movable platform to execute the above steps 301-302 through input to the control device. It should be understood that the above steps 301-302 can be partial steps during the process of the movable platform following the target for shooting. That is, steps 301-302 can be repeatedly executed during the process of the movable platform following the target for shooting, to change to different relative orientations according to the target's movement. In this way, the user only needs to trigger the shooting button in the area where shooting is desired. The movable platform can automatically change the relative orientation according to environmental information when following the target. This greatly reduces the burden brought by the user's manual control of camera movement and enhances the user experience.

In some embodiments, the user can also preset a shooting area to make the movable platform execute following of the target within the shooting area. In some embodiments, the user can also preset a finished film duration to make the movable platform edit a media file with the preset finished film duration after shooting the target. This realizes "one-click finished film" for following target shooting, further enhancing the automation and intelligence of follow shooting.

In this way, the control system, through the user's input of the target area and target duration, controls the movable platform to automatically adjust the shooting position and shooting distance according to the environmental information of the target area during the process of following the target, and shoots the target to generate an image frame sequence of the target duration. Thus, users can create finished films with one click through preset areas and preset durations, greatly reducing the threshold for users to use the movable platform's follow shooting function and enhancing the user experience.

It should be understood that the specific implementation methods of the following embodiments can refer to the explanations of the above method embodiments. To avoid repetition, they will not be described in detail herein.

In some embodiments, the method further includes: before following the target for shooting, and/or, during the process of following the target for shooting, controlling the movable platform to obtain environmental information of the shooting area. In some embodiments, the environmental information is obtained based on image data from the shooting device carried by the movable platform, and/or, the environmental information is obtained based on data from perception sensors configured on the movable platform. In some embodiments, the environmental information can be obtained based on global environmental data from data fusion detected by multiple perception sensors configured on the movable platform. In some embodiments, adjusting the relative orientation between the movable platform and the target according to the environmental information of the environment where the target is located includes: determining a following path passing through at least two following regions during the process of following the target at least according to the environmental information of the shooting area; the at least two following regions indicate different relative distances and different relative orientations with the target.

In some embodiments, the following path is determined based on observation data when the movable platform starts following the target, and/or, the following path is determined in real time based on observation data during the process of the movable platform following the target. In some embodiments, the following region is also associated with historical following information. In some embodiments, the historical following information includes at least one of the following: historical following orientation; historical following distance; historical following trajectory. In some embodiments, the historical following orientation includes one or more relative orientations maintained between the movable platform and the target during the process of following the target. In some embodiments, the historical following distance includes one or more relative distances maintained between the movable platform and the target during the process of following the target. In some embodiments, the historical following trajectory includes the relative motion trajectory formed with the target when the movable platform moves between different following regions during the process of following the target. In some embodiments, the environmental information includes at least one of the following: environment openness information; obstacle information; shooting element information; aesthetic evaluation information. In some embodiments, the shooting element information is obtained by performing semantic recognition on the environmental information acquired by the movable platform. In some embodiments, the shooting element information can be preset by the user; and/or, the shooting element information is determined in real time based on image information acquired by the movable platform. In some embodiments, the aesthetic evaluation information is determined based on at least one of shooting element distribution rules, symmetrical composition rules, and clutter rules; the shooting element distribution rules are used to indicate that different types of shooting elements can be distributed adjacently in the shooting frame according to a preset distribution order; the symmetrical composition rules are used to indicate that the same shooting element can be symmetrically distributed in the shooting frame; the clutter rules are used to indicate that the number of different types of shooting elements is below a threshold.

In some embodiments, the aesthetic evaluation information can be preset by the user; and/or, the aesthetic evaluation information is determined in real time based on image information acquired by the movable platform. In some embodiments, the target following region is also associated with the dwell time of the current following region. In some embodiments, the dwell time of the movable platform following the target in a following region with high openness is higher than the dwell time of the movable platform following the target in a following region with low openness; or, the dwell time of the movable platform following the target in a following region with few obstacles is higher than the dwell time of the movable platform following the target in a following region with many obstacles; the dwell time of following regions with shooting elements is higher than the dwell time of following regions without shooting elements; the dwell time of following regions with high aesthetic scores is higher than the dwell time of following regions with low aesthetic scores.

In some embodiments, the method further includes at least one of the following: in the case where the dwell time of the movable platform in the current following region is less than a preset threshold, if the openness of the current following region is higher than a preset threshold, then controlling the movable platform to remain in the current following region for following; in the case where the dwell time of the movable platform in the current following region is less than a preset threshold, if the openness of the current following region is lower than a preset threshold, then controlling the movable platform to move to a following region with openness higher than the preset threshold; in the case where the dwell time of the movable platform in the current following region is greater than or equal to a preset threshold, if there exists a following region with openness higher than the preset threshold, then controlling the movable platform to move to a following region with openness higher than the preset threshold.

In some embodiments, the method further includes: during at least part of the time period when the movable platform follows the target, controlling the shooting device carried by the movable platform to shoot the target. In some embodiments, controlling the shooting device carried by the movable platform to shoot the target includes: controlling the target to be approximately at the center of the shooting frame of the shooting device. In some embodiments, controlling the shooting device carried by the movable platform to shoot the target includes: during at least part of the time period when the movable platform follows the target, according to changes in the relative distance and relative orientation between the movable platform and the target, controlling the shooting device carried by the movable platform to change the shooting orientation, so that the relative position of the target in the shooting frame of the shooting device changes.

In some embodiments, the method further includes: during at least part of the time period when the movable platform follows the target, according to the movement direction of the target, controlling the shooting device carried by the movable platform to change the shooting orientation, so that in the shooting frame of the shooting device, the distance from the target along the movement direction to the shooting frame boundary is greater than the distance from the target along the direction opposite to the movement direction to the other boundary of the shooting frame. In some embodiments, the method further includes: during at least part of the time period when the movable platform follows the target, according to the environmental information acquired by the movable platform, controlling the shooting device carried by the movable platform to change the shooting orientation.

In some embodiments, the method further includes: in the case where the environmental information acquired by the movable platform indicates that the environment includes target shooting elements, controlling the movable platform to execute at least one of the following, so that target shooting elements exist in the shooting frame during at least part of the time period when the movable platform follows the target: changing the relative distance with the target; changing the relative orientation with the target; changing the shooting orientation of the carried shooting device. In some embodiments, the method further includes: in the case where it is determined according to the environmental information acquired by the movable platform that the upper part of the shooting frame of the shooting device is sky, controlling the movable platform to execute at least one of the following, so that most of the target in the shooting frame is in the lower half of the shooting frame: changing the relative distance with the target; changing the relative orientation with the target; changing the shooting orientation of the carried shooting device.

In some embodiments, the method further includes: in the case where the environmental information acquired by the movable platform indicates that the environment includes seaside and beach, controlling the movable platform to execute at least one of the following, so that in the shooting frame, the seaside and beach are respectively located on both sides of the target with approximately the same proportion: changing the relative distance with the target; changing the relative orientation with the target; changing the shooting orientation of the carried shooting device.

In some embodiments, the method further includes: after the movable platform follows the target to shoot a first image sequence, adjusting the shooting direction and/or shooting position of the movable platform to shoot a second image sequence corresponding to the current environment, and then adjusting the shooting direction and/or shooting position of the movable platform to follow the target and continue shooting a third image sequence.

In some embodiments, the method further includes: in the case where the target leaves the shooting frame of the shooting device, controlling the movable platform to execute following based on position information of electronic devices carried by the target.

In some embodiments, the method further includes: in the case where the target leaves the shooting frame of the shooting device, controlling the movable platform to execute following based on data acquired by perception sensors of the movable platform.

In some embodiments, in the case where the environmental information includes image data acquired by the shooting device, controlling the shooting device carried by the movable platform to change the shooting orientation includes: based on the aesthetic evaluation information corresponding to the environmental information, controlling the movable platform to execute at least one of the following, so that the shooting frame conforms to preset aesthetic evaluation: changing the relative distance with the target; changing the relative orientation with the target; changing the shooting orientation of the carried shooting device.

In some embodiments, the aesthetic evaluation information is determined based on at least one of shooting element distribution rules, symmetrical composition rules, and clutter rules; the shooting element distribution rules are used to indicate that different types of shooting elements can be distributed adjacently in the shooting frame according to a preset distribution order; the symmetrical composition rules are used to indicate that the same shooting element can be symmetrically distributed in the shooting frame; the clutter rules are used to indicate that the number of different types of shooting elements is below a threshold.

In some embodiments, during at least part of the time period when the movable platform follows the target, controlling the shooting device carried by the movable platform to shoot the target includes at least one of the following: during the process of the movable platform maintaining the first relative orientation and first relative distance, controlling the shooting device carried by the movable platform to shoot a first image sequence of the target; during the process of the movable platform maintaining the second relative orientation and second relative distance, controlling the shooting device carried by the movable platform to shoot a second image sequence of the target; during the process of the movable platform gradually moving from the first relative orientation and first relative distance to the second relative orientation and second relative distance, controlling the shooting device carried by the movable platform to shoot a third image sequence of the target.

In some embodiments, the method further includes: after ending the following of the target, processing the image sequence acquired by the shooting device carried by the movable platform based on a preset film finishing strategy to obtain a target image sequence, where the film finishing strategy is used to indicate selecting target image frames from the image sequence and combining them into a target image sequence.

In some embodiments, during the process of the movable platform following the target for shooting, adjusting the relative orientation between the movable platform and the target at least based on environmental information includes: during the process of the movable platform following the target for shooting, adjusting the relative orientation between the movable platform and the target according to environmental information and a preset motion following strategy; the motion following strategy is also used to make the movable platform correspond to different following distances and/or following orientations for adjacent two switching following regions during the process of following the target. In some embodiments, the motion following strategy is also used to make the movable platform traverse all preset relative orientations and all relative distances during the entire process of following the target. In some embodiments, all relative orientations include front, back, left, right, left-front, left-back, right-front, right-back. In some embodiments, the motion following strategy is also used to make the movable platform correspond to different following distances and/or following orientations for adjacent two switching following regions during the process of following the target. In some embodiments, the motion following strategy is also used to make the deflection angle of the movable platform relative to the target when switching from the first following region to the second following region the previous time different from the deflection angle and/or deflection direction of the movable platform relative to the target when switching from the second following region to the third following region the next time during the process of the movable platform following the target. In some embodiments, the motion following strategy is also used to make the movable platform select following regions with no obstacles or few obstacles during the process of switching from the previous following region to the next following region to follow the target, where different following regions correspond to different relative distances and/or relative orientations. In some embodiments, the motion following strategy is also used to make the movable platform select following regions that conform to preset aesthetic evaluation during the process of switching from the previous following region to the next following region to follow the target, where different following regions correspond to different relative distances and/or relative orientations. In some embodiments, the motion following strategy is also used to make the movable platform select following regions not covered in the current following process during the process of switching from the previous following region to the next following region to follow the target, where different following regions correspond to different relative distances and/or relative orientations. In some embodiments, the motion following strategy is also used to make the movable platform select a switching target trajectory during the process of switching from the previous following region to the next following region to follow the target, where the target trajectory includes approaching or receding.

With reference to FIG. 15, which is a schematic structural block diagram of a control device provided in an embodiment of the present application, the control device is applied to the above-mentioned movable platform 100, where the control device may be integrated into the above-mentioned movable platform 100, or may be independently provided from the movable platform 100 and communicatively connected thereto. The above-mentioned control method may also be applied to the control device.

As shown in FIG. 11, the control device 1500 includes a processor 1501 and a memory 1502. The processor 1501 and the memory 1502 are connected via a bus 1503. The bus 1503 may be an I2C (Inter-integrated Circuit) bus.

Specifically, the processor 1501 may be a Micro-controller Unit (MCU), a Central Processing Unit (CPU), or a Digital Signal Processor (DSP), etc.

Specifically, the memory 1502 may be a Flash chip, Read-Only Memory (ROM), disk, optical disk, USB flash drive, or mobile hard disk, etc.

The processor 1501 is configured to run a computer program stored in the memory 1502 and, when executing the computer program, to implement the following steps:
Control the movable platform to follow the target while maintaining a first relative distance and a first relative orientation with respect to the target; control the movable platform to move toward or away from the target from the first relative distance and the first relative orientation based on the target trajectory, so that the movable platform moves to a second relative distance and a second relative orientation with respect to the target; control the movable platform to follow the target while maintaining the second relative distance and the second relative orientation, where the first relative distance is different from the second relative distance, and the first relative orientation is different from the second relative orientation.

And/or, implement the following steps:
Receive a user input to the control device; in response to the input, generate a first instruction, the first instruction being used to instruct the movable platform to, during the process of following the target while maintaining a first relative distance and a first relative orientation, move toward or away from the target from the first relative orientation to a second relative distance and a second relative orientation based on the target trajectory, and to follow the target while maintaining the second relative distance and the second relative orientation.

And/or, implement the following steps:
During the process in which the movable platform follows the target for shooting, adjust the relative orientation between the movable platform and the target at least based on environment information; control the movable platform to follow the target while maintaining the adjusted relative orientation.

The specific implementation may refer to the method embodiments, and to avoid repetition, details are not repeated herein.

It should be noted that a person skilled in the art can clearly understand that, for the sake of convenience and conciseness, the specific working process of the above-described control device may refer to the corresponding process in the above-mentioned embodiments of the control method, and will not be repeated herein.

Some embodiments of the present application further provide a computer-readable storage medium. The computer-readable storage medium stores a computer program. The computer program includes program instructions. The processor executes the program instructions to implement the steps of the control method provided in the above embodiments.

The computer-readable storage medium may be an internal storage unit of the gimbal in any of the foregoing embodiments, such as a hard disk or memory of the gimbal. The computer-readable storage medium may also be an external storage device of the gimbal, such as a pluggable hard disk equipped on the gimbal, a Smart Media Card (SMC), a Secure Digital (SD) card, a Flash Card, etc.

It should be understood that the terms used in this specification of the present application are solely for the purpose of describing particular embodiments and are not intended to limit the present application. As used in this specification and the appended claims, unless the context clearly indicates otherwise, the singular forms "a," "an," and "the" are intended to include the plural forms.

It should also be understood that the term "and/or" used in this specification and the appended claims refers to any one or more combinations of the listed items, as well as all possible combinations, and includes these combinations.

The above are only specific embodiments of the present application, but the protection scope of the present application is not limited thereto. Any person skilled in the art, within the technical scope disclosed in the present application, can easily conceive of various equivalent modifications or substitutions, and these modifications or substitutions should be included within the protection scope of the present application. Therefore, the protection scope of the present application shall be subject to the protection scope of the claims.

## Claims

1. A control method, **characterized by** comprising:
controlling a movable platform to follow a target while maintaining a first relative distance and a first relative orientation with respect to the target;
controlling the movable platform to move toward or away from the target from the first relative distance and the first relative orientation based on a target trajectory, so that the movable platform moves to a second relative distance and a second relative orientation with respect to the target; and
controlling the movable platform to follow the target while maintaining the second relative distance and the second relative orientation, wherein
the first relative distance is different from the second relative distance, and the first relative orientation is different from the second relative orientation.

2. The method according to claim 1, **characterized in that** the controlling of the movable platform to move toward or away from the target from the first relative distance and the first relative orientation based on the target trajectory, and to follow the target while maintaining the second relative distance and the second relative orientation comprises:
controlling the movable platform, based on the target trajectory and a preset motion following strategy, to move toward or away from the target from the first relative orientation, and to follow the target while maintaining the second relative distance and the second relative orientation.

3. The method according to claim 2, **characterized in that** the motion following strategy is used to enable the movable platform to cover at least two different relative distances and relative orientations with respect to the target during the process of following the target.

4. The method according to claim 2, **characterized in that** the motion following strategy is also used to enable the movable platform to traverse all preset relative orientations and all relative distances during the entire process of following the target.

5. The method according to claim 4, **characterized in that** the all relative orientations comprise front, rear, left, right, left-front, left-rear, right-front, and right-rear.

6. The method according to claim 2, **characterized in that** the motion following strategy is also used to enable the movable platform, during the process of following the target, to have the following regions corresponding to different following distances and/or following orientations in two adjacent switching operations.

7. The method according to claim 2, **characterized in that** the motion following strategy is also used to enable that, during the process of the movable platform following the target, when the movable platform switches from the first following region to the second following region in a previous switching, the deflection angle of the movable platform relative to the target is different from the deflection angle and/or deflection direction of the movable platform relative to the target when switching from the second following region to the third following region in a subsequent switching.

8. The method according to claim 2, **characterized in that** the motion following strategy is also used to enable the movable platform, during the process of following the target when switching from a previous following region to a next following region, to select a following region with no obstacle or few obstacles, wherein different following regions correspond to different relative distances and/or relative orientations.

9. The method according to claim 2, **characterized in that** the motion following strategy is also used to enable the movable platform, during the process of following the target when switching from a previous following region to a next following region, to select a following region that meets a preset aesthetic evaluation, wherein different following regions correspond to different relative distances and/or relative orientations.

10. The method according to claim 2, **characterized in that** the motion following strategy is also used to enable the movable platform, during the process of following the target when switching from a previous following region to a next following region, to select a following region that has not been covered in the current following process, wherein different following regions correspond to different relative distances and/or relative orientations.

11. The method according to claim 2, **characterized in that** the motion following strategy is also used to enable the movable platform, during the process of following the target when switching from a previous following region to a next following region, to select a target trajectory for switching, the target trajectory comprising approaching or receding.

12. The method according to claim 2, **characterized in that** the motion following strategy is also used to enable the movable platform, when starting to follow the target, if it is determined based on obstacles and/or obstacle information in the environment that there is no reachable following region, to control the movable platform to maintain the relative orientation and relative distance at the start of following the target until a reachable following region exists.

13. The method according to claim 1, **characterized in that** during the process of controlling the movable platform to move toward or away from the target based on the target trajectory from the first relative distance and the first relative orientation, the relative distance between the movable platform and the target gradually increases or gradually decreases.

14. The method according to claim 2, **characterized in that** the motion following strategy is used to determine a following path passing through at least two following regions during the process of following the target, wherein the at least two following regions indicate different relative distances and different relative orientations with respect to the target.

15. The method according to claim 14, **characterized in that** the following path is determined based on observation data of the movable platform when starting to follow the target, and/or the following path is determined in real time based on observation data of the movable platform during the process of following the target.

16. The method according to claim 2, **characterized in that** during the process in which the movable platform switches from the first relative distance and the first relative orientation to the second relative distance and the second relative orientation, the motion following strategy is used to determine a target following region from a plurality of candidate following regions, wherein the plurality of candidate following regions respectively indicate different relative distances and different relative orientations with respect to the target, the target following region indicates the second relative distance and the second relative orientation with respect to the target, and the target following region is at least associated with environmental information and/or historical following information.

17. The method according to claim 16, **characterized in that** the environmental information is obtained by a shooting device mounted on the movable platform, or the environmental information is obtained by a perception sensor of the movable platform.

18. The method according to claim 17, **characterized in that** the historical following information comprises at least one of the following:
historical following orientation; historical following distance; historical following trajectory.

19. The method according to claim 18, **characterized in that** the historical following orientation comprises one or more relative orientations maintained between the movable platform and the target during the process of following the target.

20. The method according to claim 18, **characterized in that** the historical following distance comprises one or more relative distances maintained between the movable platform and the target during the process of following the target.

21. The method according to claim 18, **characterized in that** the historical following trajectory comprises the relative motion trajectory formed with the target when the movable platform moves between different following regions during the process of following the target.

22. The method according to claim 16, **characterized in that** the environmental information comprises at least one of the following:
environment openness information; obstacle information; shooting element information; aesthetic evaluation information.

23. The method according to claim 22, **characterized in that** the shooting element information is obtained based on semantic recognition of the environmental information obtained by the movable platform.

24. The method according to claim 22, **characterized in that** the shooting element information can be preset by a user; and/or, the shooting element information is determined in real time based on image information obtained by the movable platform.

25. The method according to claim 22, **characterized in that** the aesthetic evaluation information is determined based on at least one of the distribution rules of shooting elements, symmetry composition rules, and clutter rules;
wherein the shooting element distribution rules are used to indicate that different types of shooting elements can be arranged adjacently in the captured frame according to a preset distribution order; the symmetry composition rules are used to indicate that the same shooting element can be symmetrically distributed in the captured frame; the clutter rules are used to indicate that the number of different types of shooting elements is below a threshold.

26. The method according to claim 22, **characterized in that** the aesthetic evaluation information can be preset by a user; and/or, the aesthetic evaluation information is determined in real time based on image information acquired by the movable platform.

27. The method according to any one of claims 2 to 26, **characterized in that** the motion following strategy is used to determine a target following region based on priority information of the following regions, the target following region being the region with the highest priority among the following regions.

28. The method according to claim 27, **characterized in that** in the case where the target following region is associated with historical following information, the priority information of the following regions satisfies at least one of the following:
the priority of a following region at a historical following orientation is lower than the priority of a following region not at a historical following orientation;
the priority of a following region at a historical following distance is lower than the priority of a following region not at a historical following distance;
the priority of a following region where, in a previous switching from a first following region to a second following region, the deflection angle of the movable platform relative to the target differs from the deflection angle and/or deflection direction of the movable platform relative to the target in a subsequent switching from the second following region to a third following region, is higher than the priority of a following region where the deflection angle of the movable platform relative to the target in the previous switching and the deflection angle and/or deflection direction in the subsequent switching are the same.

29. The method according to claim 27, **characterized in that** in the case where the target following region is associated with environmental information, the priority information of the following regions satisfies at least one of the following:
the priority of a following region with high openness is higher than the priority of a following region with low openness;
the priority of a following region with no or few obstacles is higher than the priority of a following region with obstacles or many obstacles;
the priority of a following region with shooting elements present is higher than the priority of a following region without shooting elements;
the priority of a following region with a high aesthetic score is higher than the priority of a following region with a low aesthetic score.

30. The method according to claim 27, **characterized in that** the priority information can be preset by a user, and/or is obtained through real-time calculation.

31. The method according to claim 27, **characterized in that** the priority information is determined based on the score of the following region.

32. The method according to claim 3, **characterized in that** the target following region is also associated with the dwell time of the current following region.

33. The method according to claim 32, **characterized in that** the dwell time of the movable platform in the current following region satisfies any one of the following:
the dwell time of the movable platform following the target in a following region with high openness is higher than the dwell time of the movable platform following the target in a following region with low openness;
the dwell time of the movable platform following the target in a following region with few obstacles is higher than the dwell time of the movable platform following the target in a following region with many obstacles;
the dwell time of a following region with shooting elements present is higher than the dwell time of a following region without shooting elements;
the dwell time of a following region with a high aesthetic score is higher than the dwell time of a following region with a low aesthetic score.

34. The method according to claim 32, **characterized in that** the method further comprises at least one of the following:
when the dwell time of the current following region is less than a preset threshold, if the openness of the current following region is higher than the preset threshold, controlling the movable platform to remain in the current following region to follow;
when the dwell time of the current following region is less than the preset threshold, if the openness of the current following region is lower than the preset threshold, controlling the movable platform to move to a following region with openness higher than the preset threshold;
when the dwell time of the current following region is greater than or equal to the preset threshold, if a following region with openness higher than the preset threshold exists, controlling the movable platform to move to the following region with openness higher than the preset threshold;
when the dwell time of the current following region is greater than or equal to the preset threshold, if no following region with openness higher than the preset threshold exists, controlling the movable platform to remain in the current following region to follow the target until a following region with openness higher than the preset threshold appears.

35. The method according to claim 1, **characterized in that** the relative orientation between the movable platform and the target is determined based on the orientation of the target.

36. The method according to claim 1, **characterized in that** the relative orientation between the movable platform and the target is determined based on the moving direction of the target.

37. The method according to claim 35 or 36, **characterized in that** when it is detected that the target is in a moving state, the relative orientation between the movable platform and the target is determined based on the moving direction of the target;
when it is detected that the target is in a stationary state, the relative orientation between the movable platform and the target is determined based on the orientation of the target.

38. The method according to any one of claims 1, 35, or 36, **characterized in that** the controlling of the movable platform to move toward or away from the target based on the target trajectory from the first relative orientation and to follow the target while maintaining the second relative distance and the second relative orientation comprises:
adjusting the target trajectory in real time based on the moving direction or orientation of the target.

39. The method according to claim 38, **characterized in that** the adjusting of the target trajectory in real time based on the moving direction or orientation of the target comprises:
if the moving direction of the target changes, re-determining the second relative orientation based on the current moving direction of the target; or, if the orientation of the target changes, re-determining the second relative orientation based on the current orientation of the target;
adjusting the target trajectory based on the re-determined second relative orientation.

40. The method according to claim 38, **characterized in that** the adjusting of the target trajectory in real time based on the moving direction or orientation of the target comprises:
if the orientation or moving direction of the target deflects by 180 degrees, controlling the movable platform to circle the target half a turn using the current relative distance between the movable platform and the target as the radius, then continuing to follow the target, and during the process of circling the target, the target continuously remaining in the frame captured by the shooting device of the movable platform.

41. The method according to claim 1, **characterized in that** the relative distance comprises a horizontal relative distance and/or a vertical relative distance.

42. The method according to claim 39, **characterized in that** the first relative distance includes a first horizontal relative distance and a first vertical relative distance, and the second relative distance includes a second horizontal relative distance and a second vertical relative distance, wherein the first horizontal relative distance corresponds to the first vertical relative distance, the second horizontal relative distance corresponds to the second vertical relative distance, and the first vertical relative distance and the second vertical relative distance are different.

43. The method according to claim 42, **characterized in that** a magnitude relationship between the first horizontal relative distance and the second horizontal relative distance is the same as the magnitude relationship between the first vertical relative distance and the second vertical relative distance.

44. The method according to claim 41, **characterized in that** the controlling of the movable platform to move toward or away from the target based on the target trajectory from the first relative distance and the first relative orientation comprises:
controlling the movable platform to gradually move from the first relative distance to the second relative distance along the horizontal and/or vertical direction, while controlling the movable platform to gradually move from the first relative orientation to the second relative orientation.

45. The method according to claim 1, **characterized in that** the method further comprises:
during at least a portion of the time period in which the movable platform follows the target, controlling a shooting device mounted on the movable platform to capture the target.

46. The method according to claim 45, **characterized in that** the controlling of the shooting device mounted on the movable platform to capture the target comprises:
controlling the target to be approximately at the center of the frame of the shooting device.

47. The method according to claim 1, **characterized in that** the method further comprises:
during at least a portion of a time period in which the movable platform follows the target, controlling a shooting device mounted on the movable platform to change its shooting orientation based on changes in the relative distance and relative orientation between the movable platform and the target, so that the relative position of the target changes in the frame captured by the shooting device.

48. The method according to claim 1, **characterized in that** the method further comprises:
during at least a portion of a time period in which the movable platform follows the target, controlling a shooting device mounted on the movable platform to change its shooting orientation based on the moving direction of the target, so that in the frame captured by the shooting device, the distance from the target to the edge of the frame along the moving direction is greater than the distance from the target to the opposite edge of the frame along the direction opposite to the moving direction.

49. The method according to claim 1, **characterized in that** the method further comprises:
during at least a portion of a time period in which the movable platform follows the target, controlling a shooting device mounted on the movable platform to change its shooting orientation based on environmental information acquired by the movable platform.

50. The method according to claim 1 or 49, **characterized in that** the method further comprises:
when the environmental information obtained by the movable platform indicates that the environment includes target shooting elements, controlling the movable platform to perform at least one of the following, so that during at least a portion of the time period in which the movable platform follows the target, the frame captured by the shooting device comprises the target shooting elements:
changing the relative distance to the target;
changing the relative orientation to the target; and
changing the shooting orientation of the mounted shooting device.

51. The method according to claim 1 or 49, **characterized in that** the method further comprises:
when it is determined based on the environmental information obtained by the movable platform that an upper portion of the shooting device's frame is the sky, controlling the movable platform to perform at least one of the following so that most of the target is positioned in the lower half of the frame:
changing the relative distance to the target;
changing the relative orientation to the target; and
changing the shooting orientation of the mounted shooting device.

52. The method according to claim 1 or 49, **characterized in that** the method further comprises:
when the environmental information obtained by the movable platform indicates that the environment includes a seaside and a beach, controlling the movable platform to perform at least one of the following so that in the frame, the seaside and the beach are respectively positioned on two sides of the target and occupy approximately the same proportion:
changing the relative distance to the target;
changing the relative orientation to the target; and
changing the shooting orientation of the mounted shooting device.

53. The method according to claim 45, **characterized in that** the method further comprises:
after the movable platform follows the target to capture a first image sequence, adjusting the shooting direction and/or shooting position of the movable platform to capture a second image sequence corresponding to the current environment, and then adjusting the shooting direction and/or shooting position of the movable platform to continue following the target to capture a third image sequence.

54. The method according to any one of claims 45, 49, or 53, **characterized in that** the method further comprises:
when the target leaves the frame of the shooting device, controlling the movable platform to follow based on position information of an electronic device carried by the target.

55. The method according to any one of claims 45, 49, or 53, **characterized in that** the method further comprises:
when the target leaves the frame of the shooting device, controlling the movable platform to follow based on data acquired by a perception sensor of the movable platform.

56. The method according to claim 49, **characterized in that** the controlling of the shooting device mounted on the movable platform to change its shooting orientation comprises:
based on the aesthetic evaluation information corresponding to the environmental information, controlling the movable platform to perform at least one of the following so that the captured frame meets a preset aesthetic evaluation:
changing the relative distance to the target;
changing the relative orientation to the target;
changing the shooting orientation of the mounted shooting device.

57. The method according to claim 56, **characterized in that** the aesthetic evaluation information is determined based on at least one of the distribution rules of shooting elements, symmetry composition rules, and clutter rules;
wherein the shooting element distribution rules are used to indicate that different types of shooting elements can be arranged adjacently in the captured frame according to a preset distribution order; the symmetry composition rules are used to indicate that the same shooting element can be symmetrically distributed in the captured frame; the clutter rules are used to indicate that the number of different types of shooting elements is below a threshold.

58. The method according to claim 45, **characterized in that** during at least a portion of the time period in which the movable platform follows the target, the controlling of the shooting device mounted on the movable platform to capture the target comprises at least one of the following:
controlling the shooting device mounted on the movable platform to capture a first image sequence of the target while the movable platform is maintained at the first relative orientation and the first relative distance;
controlling the shooting device mounted on the movable platform to capture a second image sequence of the target while the movable platform is maintained at the second relative orientation and the second relative distance;
controlling the shooting device mounted on the movable platform to capture a third image sequence of the target while the movable platform gradually moves from the first relative orientation and the first relative distance to the second relative orientation and the second relative distance.

59. The method according to claim 1 or 58, **characterized in that** the method further comprises:
after finishing following the target, processing the image sequences obtained by the shooting device mounted on the movable platform to obtain a target image sequence.

60. The method according to claim 1, **characterized in that** the target trajectory is determined based on a user input operation.

61. The method according to claim 60, **characterized in that** the target trajectory is determined based on input on a target interface displayed on a control device, the target interface being used to indicate the relative distance and/or relative orientation between the target and the movable platform.

62. The method according to claim 61, **characterized in that** the target trajectory is determined based on a current relative position between the movable platform and the target and a target point input by a user on the target interface.

63. The method according to claim 62, **characterized in that** the target trajectory is determined based on a relative relationship between a first relative position between the movable platform and the target and a second relative position corresponding to a target point, different relative positions corresponding to different relative distances and/or relative orientations.

64. The method according to claim 63, **characterized in that** when a relative distance between the first relative position and the second relative position is less than a first preset threshold, the movable platform switches from the first relative position to the second relative position to follow the target according to a first preset trajectory type;
when the relative distance between the first relative position and the second relative position is greater than or equal to the first preset threshold, the movable platform switches from the first relative position to the second relative position to follow the target according to the first preset trajectory type connected with a second preset trajectory type;
wherein the first preset trajectory type and the second preset trajectory type are different.

65. The method according to claim 64, **characterized in that** a leading end of the first preset trajectory type is tangent to a circle having the target as a center and a first radius, and a trailing end is tangent to a circle having the target as the center and a second radius, the second preset trajectory type coinciding with the circle of the first radius or the circle of the second radius, the first radius being the first relative distance, and the second radius being the second relative distance.

66. The method according to claim 61, **characterized in that** the target trajectory is determined based on at least one target point input by a user on the target interface.

67. The method according to claim 61, **characterized in that** the target trajectory is determined based on a trajectory input by a user.

68. The method according to claim 67, **characterized in that** the trajectory input by the user is used to determine a start point and/or an end point of the target trajectory.

69. The method according to claim 67, **characterized in that** the trajectory input by the user is used to determine a direction of the target trajectory.

70. The method according to claim 60, **characterized in that** the target trajectory is determined based on an input by a user on at least one physical control of the control device.

71. The method according to claim 70, **characterized in that** the physical control comprises at least one of a mechanical key, an electronic key, a joystick, a dial, or a code disc.

72. The method according to claim 70, **characterized in that** one physical control corresponds to at least the relative distance and/or relative orientation.

73. The method according to any one of claims 60 to 72, **characterized in that** the target trajectory is one of a curve or a straight line, or a combination of both.

74. A control method for a movable platform, **characterized in that** the method comprises:
receiving an input by a user on a control device; and
in response to the input, generating a first instruction, the first instruction being configured to instruct the movable platform, while maintaining a first relative distance and a first relative orientation to follow a target, to move toward or away from the target from the first relative orientation based on a target trajectory to a second relative distance and a second relative orientation, and to maintain the second relative distance and the second relative orientation to follow the target.

75. The method according to claim 74, **characterized in that** in a process of moving toward the target from the first relative orientation based on the target trajectory to the second relative distance and second relative orientation, a relative distance between the movable platform and the target decreases;
in a process of moving away from the target from the first relative orientation based on the target trajectory to the second relative distance and second relative orientation, the relative distance between the movable platform and the target increases.

76. The method according to claim 74, **characterized in that** the control device comprises a target interface, and the receiving of the input by the user on the control device comprises:
receiving the input by the user on the target interface, the target interface being configured to indicate and/or change a relative distance and/or relative orientation between the target and the movable platform.

77. The method according to claim 76, **characterized in that** the target trajectory is determined based on at least one target point input by the user on the target interface.

78. The method according to claim 77, **characterized in that** the target trajectory is determined based on a current first relative position between the movable platform and the target and a second relative position corresponding to a target point.

79. The method according to claim 78, **characterized in that** when the relative distance between the first relative position and the second relative position is less than a first preset threshold, the target trajectory connects the first relative position and the second relative position with a first preset trajectory type;
when the relative distance between the first relative position and the second relative position is greater than or equal to the first preset threshold, the target trajectory connects the first relative position and the second relative position with a second preset trajectory type;
wherein the first preset trajectory type and the second preset trajectory type are different.

80. The method according to claim 79, **characterized in that** a leading end of the first preset trajectory type is tangent to a circle having the target as a center and a first radius, and a trailing end is tangent to a circle having the target as the center and a second radius; the second preset trajectory type coincides with the circle of the first radius or the circle of the second radius, the first radius being the first relative distance, and the second radius being the second relative distance.

81. The method according to claim 75, **characterized in that** the target trajectory is determined based on a trajectory input by the user.

82. The method according to claim 81, **characterized in that** the trajectory input by the user is used to determine the starting point and/or end point of the target trajectory.

83. The method according to claim 81, **characterized in that** the trajectory input by the user is used to determine a direction of the target trajectory.

84. The method according to any one of claims 75 to 83, **characterized in that** the target trajectory is one of a curve or a straight line, or a combination of both.

85. The method according to any one of claims 75 to 83, **characterized in that** the target trajectory is a trajectory circling the target.

86. The method according to any one of claims 75 to 83, **characterized in that** the receiving of the user input on the target interface comprises:
receiving a tap operation by the user on the target interface to determine at least one target point in the target trajectory; and/or,
receiving a swipe operation by the user on the target interface to determine the target trajectory.

87. The method according to claim 76, **characterized in that** the target interface comprises at least two regions, with different regions indicating different relative distances and/or relative orientations;
the receiving of the user input on the target interface comprises:
receiving a first input on at least one region of the target interface; and
the first instruction is further configured to: in response to the first input, control the movable platform to move according to the relative orientation and relative distance indicated by a region corresponding to the user input.

88. The method according to claim 87, **characterized in that** the at least two regions comprise a first region and a second region, wherein any target point in the first region indicates the same relative distance and/or relative orientation, and any target point in the second region indicates the same relative distance and/or relative orientation.

89. The method according to claim 87, **characterized in that** in the case where the relative distances of any target point in the first region are the same, the first instruction is further configured to:
upon receiving an input for at least one target point in the first region, during the process of following the target, control the movable platform to change the relative orientation with the target based on the relative position of the target point in the first region.

90. The method according to claim 88, **characterized in that** in the case where the relative orientations of any target point in the first region are the same, the first instruction is further configured to:
upon receiving an input for at least one target point in the first region, during the process of following the target, control the movable platform to change the relative distance with the target based on the relative position of the target point in the first region.

91. The method according to claim 88, **characterized in that** the receiving of the user input on the target interface comprises:
receiving a second input by the user on the first region and the second region, the second input being a trajectory input; and
the first instruction is further configured to:
in response to the second input, control the movable platform, during the process of following the target, to gradually move from the relative distance and relative orientation indicated by the first region to the relative distance and relative orientation indicated by the second region based on the direction of the trajectory input.

92. The method according to claim 91, **characterized in that** regions indicating different relative distances are located on circular rings with different radii centered on the target.

93. The method according to claim 91, **characterized in that** regions indicating different relative orientations are located on a circular ring with the same radius centered on the target.

94. The method according to any one of claims 87 to 93, **characterized in that** the relative distance and/or relative orientation indicated by different regions can be set by the user.

95. The method according to claim 77, **characterized in that** the target interface further comprises an automatic execution control, and the method further comprises:
receiving a third input by the user for the automatic execution control;
in response to the third input, generating a second instruction, the second instruction being configured to instruct the movable platform to follow the target according to a preset motion following strategy, the preset motion following strategy being used to enable the movable platform, during the process of following the target for shooting, to cover at least two different relative distances and relative orientations with the target.

96. The method according to claim 95, **characterized in that** the method further comprises:
displaying motion trend information of the movable platform on the target interface during the process of the movable platform following the target.

97. The method according to claim 74 or 75, **characterized in that** the relative distance comprises a horizontal relative distance and a vertical relative distance.

98. The method according to claim 97, **characterized in that** the horizontal relative distance and the vertical relative distance correspond one-to-one.

99. The method according to claim 97, **characterized in that** the target interface indicates a three-dimensional spatial relationship with the target.

100. The method according to claim 97, **characterized in that** the receiving of the user input on the target interface comprises:
receiving a trajectory input operation by the user on the target interface along a target direction, the target direction being used to indicate that the movable platform changes the horizontal relative distance and the vertical relative distance with the target; and
the first instruction is further configured to:
in response to the input operation, while controlling the movable platform to change the relative orientation with the target, change the horizontal relative distance and the vertical relative distance with the target along the target direction.

101. The method according to claim 97, **characterized in that** the receiving of the user input on the target interface comprises:
receiving a user input on at least one control on the control device, wherein the at least one control is respectively used for at least one of the relative orientation, the relative horizontal distance, and the relative vertical distance with the target.

102. The method according to claim 97, **characterized in that** the receiving of the user input on the target interface comprises:
receiving the user input on at least one physical control on the control device.

103. The method according to claim 102, **characterized in that** the physical control comprises at least one of a mechanical button, an electronic button, a joystick, a dial, and a code disc.

104. The method according to claim 74, **characterized in that** the method further comprises:
receiving a fourth input by the user on the control device;
in response to the fourth input, changing the motion parameters of the movable platform during the process of following the target, wherein the motion parameters comprise at least one of the following: following speed, following height, and obstacle-avoidance detour attitude.

105. The method according to claim 74, **characterized in that** the method further comprises:
receiving a fifth input by the user on the control device;
in response to the fifth input, changing, during the process of the movable platform following the target, the shooting parameters of the shooting device mounted on the movable platform, wherein the shooting parameters comprise at least one of the following: shooting orientation, shooting subject, focus distance, and aperture size.

106. The method according to claim 104 or 105, **characterized in that** the fourth input and/or the fifth input is an input on the control device before following the target.

107. The method according to claim 104 or 105, **characterized in that** the fourth input and/or the fifth input is an input on the control device during the process of following the target.

108. A control method, **characterized in that** the control method comprises:
during a process of a movable platform following a target for shooting, adjusting a relative orientation between the movable platform and the target at least based on environmental information; and
controlling the movable platform to follow the target while maintaining an adjusted relative orientation.

109. The method according to claim 108, **characterized in that** the environmental information comprises at least one of the following:
environmental information of a shooting area preset by the user;
environmental information of the environment where the target is located;
environmental information of the environment where the movable platform is located.

110. The method according to claim 108 or 109, **characterized in that** the method further comprises:
prior to and/or during the process of following the target for shooting, controlling the movable platform to obtain environmental information of the shooting area.

111. The method according to claim 108 or 109, **characterized in that** the environmental information is obtained based on image data from a shooting device mounted on the movable platform, and/or based on data from a perception sensor provided on the movable platform.

112. The method according to claim 108 or 109, **characterized in that** the environmental information is obtained based on global environmental data fused from data detected by a plurality of perception sensors provided on the movable platform.

113. The method according to claim 108 or 109, **characterized in that** the adjusting of the relative orientation between the movable platform and the target based on the environmental information of the environment where the target is located comprises:
at least based on the environmental information of the shooting area, determining, during the process of following the target, a following path passing through at least two following regions, the at least two following regions indicating different relative distances and different relative orientations with the target.

114. The method according to claim 113, **characterized in that** the following path is determined based on observation data of the movable platform at the start of following the target, and/or is determined in real time based on observation data during the process of the movable platform following the target.

115. The method according to claim 113, **characterized in that** the following region is further associated with historical following information.

116. The method according to claim 115, **characterized in that** the historical following information comprises at least one of the following:
historical following orientation; historical following distance; historical following trajectory.

117. The method according to claim 116, **characterized in that** the historical following orientation comprises one or more relative orientations maintained between the movable platform and the target during the process of following the target.

118. The method according to claim 116, **characterized in that** the historical following distance comprises one or more relative distances maintained between the movable platform and the target during the process of following the target.

119. The method according to claim 116, **characterized in that** the historical following trajectory comprises the relative motion trajectory formed with the target when the movable platform moves between different following regions during the process of following the target.

120. The method according to claim 108 or 109, **characterized in that** the environmental information comprises at least one of the following:
environment openness information; obstacle information; shooting element information; aesthetic evaluation information.

121. The method according to claim 120, **characterized in that** the shooting element information is obtained based on semantic recognition of the environmental information acquired by the movable platform.

122. The method according to claim 120, **characterized in that** the shooting element information can be preset by the user; and/or, the shooting element information is determined in real time based on image information acquired by the movable platform.

123. The method according to claim 120, **characterized in that** the aesthetic evaluation information is determined based on at least one of shooting element distribution rules, symmetry composition rules, and clutter rules;
wherein the shooting element distribution rules are used to indicate that different types of shooting elements can be distributed adjacently in a preset distribution order in the shooting frame; the symmetry composition rules are used to indicate that the same shooting element can be symmetrically distributed in the shooting frame; the clutter rules are used to indicate that the number of different types of shooting elements is below a threshold.

124. The method according to claim 120, **characterized in that** the aesthetic evaluation information can be preset by the user; and/or, the aesthetic evaluation information is determined in real time based on image information acquired by the movable platform.

125. The method according to claim 113, **characterized in that** the duration for which the movable platform maintains the following region corresponding to the adjusted relative orientation is also associated with the environmental information of the current following region.

126. The method according to claim 125, **characterized in that** a dwell time of the movable platform following the target in a following region with high openness is higher than the dwell time of the movable platform following the target in a following region with low openness;
a dwell time of the movable platform following the target in a following region with fewer obstacles is higher than the dwell time of the movable platform following the target in a following region with more obstacles;
a dwell time of a following region with shooting elements is higher than the dwell time of a following region without shooting elements; or
a dwell time of a following region with a high aesthetic score is higher than that of a following region with a low aesthetic score.

127. The method according to claim 125, **characterized in that** the method further comprises at least one of:
when a dwell time of the current following region is less than a preset threshold, if the openness of the current following region is higher than the preset threshold, the platform remains in the current following region to follow;
when a dwell time of the current following region is less than the preset threshold, if the openness of the current following region is lower than the preset threshold, the movable platform is controlled to move to a following region with openness higher than the preset threshold;
when a dwell time of the current following region is greater than or equal to the preset threshold, if there exists a following region with openness higher than the preset threshold, the movable platform is controlled to move to the following region with openness higher than the preset threshold.

128. The method according to claim 125, **characterized in that** the method further comprises:
during at least a part of a time period in which the movable platform follows the target, controlling the shooting device mounted on the movable platform to shoot the target.

129. The method according to claim 128, **characterized in that** the controlling of the shooting device mounted on the movable platform to shoot the target comprises:
controlling the target to be approximately at the center of the shooting frame of the shooting device.

130. The method according to claim 128, **characterized in that** during at least a part of the time period in which the movable platform follows the target, the controlling of the shooting device mounted on the movable platform to shoot the target comprises:
during at least a part of the time period in which the movable platform follows the target, controlling the shooting device mounted on the movable platform to change the shooting orientation based on changes in the relative distance and relative orientation between the movable platform and the target, so that the relative position of the target in the shooting frame of the shooting device changes.

131. The method according to claim 130, **characterized in that** the method further comprises:
during at least a part of the time period in which the movable platform follows the target, controlling the shooting device mounted on the movable platform to change the shooting orientation based on the movement direction of the target, so that in the shooting frame of the shooting device, the distance from the target to the frame boundary along the movement direction is greater than the distance from the target to the opposite frame boundary along the direction opposite to the movement direction.

132. The method according to claim 128, **characterized in that** the method further comprises:
during at least a part of the time period in which the movable platform follows the target, controlling the shooting device mounted on the movable platform to change the shooting orientation based on environmental information acquired by the movable platform.

133. The method according to any one of claims 128, 130, and 132, **characterized in that** the method further comprises:
when the environmental information acquired by the movable platform indicates that the environment includes target shooting elements, controlling the movable platform to perform at least one of the following, so that during at least a part of the time period in which the movable platform follows the target, the target shooting elements are present in the shooting frame:
changing the relative distance with the target;
changing the relative orientation with the target;
changing the shooting orientation of the mounted shooting device.

134. The method according to any one of claims 128, 130, and 132, **characterized in that** the method further comprises:
when it is determined, based on environmental information acquired by the movable platform, that the upper part of the shooting frame of the shooting device is the sky, controlling the movable platform to perform at least one of the following, so that most of the target is in the lower half of the shooting frame:
changing the relative distance with the target;
changing the relative orientation with the target;
changing the shooting orientation of the mounted shooting device.

135. The method according to any one of claims 128, 130, and 132, **characterized in that** the method further comprises:
when the environmental information acquired by the movable platform indicates that the environment includes a seaside and a beach, controlling the movable platform to perform at least one of the following, so that in the shooting frame, the seaside and the beach are located on both sides of the target and occupy approximately the same proportion:
changing the relative distance with the target;
changing the relative orientation with the target;
changing the shooting orientation of the mounted shooting device.

136. The method according to claim 128, **characterized in that** the method further comprises:
after the movable platform follows the target to shoot a first image sequence, adjusting the shooting orientation and/or shooting position of the movable platform to shoot a second image sequence corresponding to the current environment, and then adjusting the shooting orientation and/or shooting position of the movable platform to follow the target to continue shooting a third image sequence.

137. The method according to any one of claims 128, 130, and 132, **characterized in that** the method further comprises:
when the target moves out of the shooting frame of the shooting device, controlling the movable platform to follow based on the location information of an electronic device carried by the target.

138. The method according to any one of claims 128, 130, and 132, **characterized in that** the method further comprises:
when the target moves out of the shooting frame of the shooting device, controlling the movable platform to follow based on data acquired by perception sensors of the movable platform.

139. The method according to claim 134, **characterized in that** when the environmental information comprises image data obtained by the shooting device, the controlling of the shooting device mounted on the movable platform to change the shooting orientation comprises:
based on aesthetic evaluation information corresponding to the environmental information, controlling the movable platform to perform at least one of the following, so that the shooting frame conforms to a preset aesthetic evaluation:
changing the relative distance with the target;
changing the relative orientation with the target;
changing the shooting orientation of the mounted shooting device.

140. The method according to claim 139, **characterized in that** the aesthetic evaluation information is determined based on at least one of shooting element distribution rules, symmetry composition rules, and clutter rules;
wherein the shooting element distribution rules are used to indicate that different types of shooting elements can be distributed adjacently in a preset distribution order in the shooting frame; the symmetry composition rules are used to indicate that the same shooting element can be symmetrically distributed in the shooting frame; the clutter rules are used to indicate that the number of different types of shooting elements is below a threshold.

141. The method according to claim 128, **characterized in that** during at least a part of the time period in which the movable platform follows the target, the controlling of the shooting device mounted on the movable platform to shoot the target comprises at least one of the following:
during a process in which the movable platform maintains the first relative orientation and the first relative distance, controlling the shooting device mounted on the movable platform to shoot a first image sequence of the target;
during a process in which the movable platform maintains the second relative orientation and the second relative distance, controlling the shooting device mounted on the movable platform to shoot a second image sequence of the target;
during a process in which the movable platform gradually moves from the first relative orientation and the first relative distance to the second relative orientation and the second relative distance, controlling the shooting device mounted on the movable platform to shoot a third image sequence of the target.

142. The method according to claim 128 or 141, **characterized in that** the method further comprising:
after ending the following of the target, processing the image sequence obtained by the shooting device mounted on the movable platform based on a preset film finishing strategy to obtain a target image sequence, wherein the film finishing strategy is used to indicate selecting target image frames from the image sequence and combining them into the target image sequence.

143. The method according to claim 108, **characterized in that** during the process of the movable platform following the target for shooting, the adjusting of the relative orientation between the movable platform and the target at least based on environmental information comprises:
during the process of the movable platform following the target for shooting, adjusting the relative orientation between the movable platform and the target based on the environmental information and a preset motion following strategy; wherein the motion following strategy is further used to ensure that during the process of following the target, two consecutively switched following regions correspond to different following distances and/or following orientations.

144. The method according to claim 143, **characterized in that** the motion following strategy is further used to ensure that, during the entire process of following the target, the movable platform traverses all preset relative orientations and all relative distances.

145. The method according to claim 144, **characterized in that** the all relative orientations comprise front, back, left, right, left-front, left-back, right-front, and right-back.

146. The method according to claim 144, **characterized in that** the motion following strategy is further used to ensure that, during the process of following the target, two consecutively switched following regions correspond to different following distances and/or following orientations.

147. The method according to claim 144, **characterized in that** the motion following strategy is further used to ensure that, during the process of following the target, the deflection angle of the movable platform relative to the target when switching from a first following region to a second following region is different from the deflection angle and/or deflection direction of the movable platform relative to the target when subsequently switching from the second following region to a third following region.

148. The method according to claim 144, **characterized in that** the motion following strategy is further used to ensure that, during the process in which the movable platform follows the target while switching from a previous following region to a next following region, following regions with no or few obstacles are selected, wherein different following regions correspond to different relative distances and/or relative orientations.

149. The method according to claim 144, **characterized in that** the motion following strategy is further used to ensure that, during the process in which the movable platform follows the target while switching from a previous following region to a next following region, following regions that conform to a preset aesthetic evaluation are selected, wherein different following regions correspond to different relative distances and/or relative orientations.

150. The method according to claim 144, **characterized in that** the motion following strategy is further used to ensure that, during the process in which the movable platform follows the target while switching from a previous following region to a next following region, following regions not yet covered in the current following process are selected, wherein different following regions correspond to different relative distances and/or relative orientations.

151. The method according to claim 144, **characterized in that** the motion following strategy is further used to ensure that, during the process in which the movable platform follows the target while switching from a previous following region to a next following region, a target trajectory for switching is selected, the target trajectory comprising approaching or receding.

152. A control device, **characterized in that** the control device comprises a memory and a processor;
the memory is configured to store a computer program; and
the processor is configured to execute the computer program and, when executing the computer program, implement the method steps according to any one of claims 1 to 73.

153. A control device, **characterized in that** the control device comprises a memory and a processor;
the memory is configured to store a computer program; and
the processor is configured to execute the computer program and, when executing the computer program, implement the method steps according to any one of claims 74 to 107.

154. A control device, **characterized in that** the control device comprises a memory and a processor;
the memory is configured to store a computer program; and
the processor is configured to execute the computer program and, when executing the computer program, implement the method steps according to any one of claims 108 to 151.

155. A movable platform, **characterized in that** the movable platform comprises the control device according to claim 152 and/or claim 154.

156. A control system, **characterized in that** the control system comprises:
a movable platform, comprising the control device according to claim 152 and/or claim 154; and
a control terminal, configured to control the movable platform.

157. A control system, **characterized in that** the control system comprises:
a movable platform; and
a control terminal, configured to control the movable platform, comprising the control device according to claim 153.

158. A control system, **characterized in that** the control system comprises:
a movable platform, comprising the control device according to claim 152 and/or 154; and
a control terminal, configured to control the movable platform, comprising the control device according to claim 153.

159. A computer-readable storage medium, wherein the computer-readable storage medium stores a computer program, and when the computer program is executed by a processor, the processor is enabled to implement at least one of the following:
the method steps according to any one of claims 1 to 73;
the method steps according to any one of claims 74 to 107;
the method steps according to any one of claims 108 to 151.
